# EUROPÄISCHE PATENTSCHRIFT

(11) **EP 2 171 287 B1**
(45) Veröffentlichungstag und Bekanntmachung des Hinweises auf die Patenterteilung: **30.09.2015**
(21) Anmeldenummer: 08773925.6
(22) Anmeldetag: 09.07.2008
(51) Int. Cl.: F15B 11/042, F16D 48/02

(54) **VORRICHTUNG ZUM STELLEN EINES AKTUATORS**
DEVICE FOR ADJUSTING AN ACTUATOR
DISPOSITIF DE RÉGLAGE D'UN ACTIONNEUR

(30) Priorität: 16.07.2007 DE 102007032964
(43) Veröffentlichungstag der Anmeldung: 07.04.2010
(73) Patentinhaber: KNORR-BREMSE Systeme für Nutzfahrzeuge GmbH, 80809 München (DE)
(72) Erfinder: DEEG, Markus, 71735 Eberdingen (DE); DÖRR, Wolfgang, 82223 Eichenau (DE); REBHAN, Stephan, 81373 München (DE)
(74) Vertreter: Mattusch, Gundula
(86) Internationale Anmeldenummer: PCT/EP2008/005578
(87) Internationale Veröffentlichungsnummer: WO 2009/010215

(56) Entgegenhaltungen:
- EP-A- 1 614 947
- WO-A-2007/028863
- DE-A1- 10 103 843
- DE-C1- 10 018 400

## Beschreibung

Die Erfindung betrifft eine Vorrichtung zum Stellen eines Aktuators, insbesondere eines Kupplungsaktuators eines Fahrzeugs, gemäß dem Oberbegriff von Anspruch 1.

Weiterhin bezieht sich die Erfindung auf ein Verfahren zum Stellen eines Aktuators.

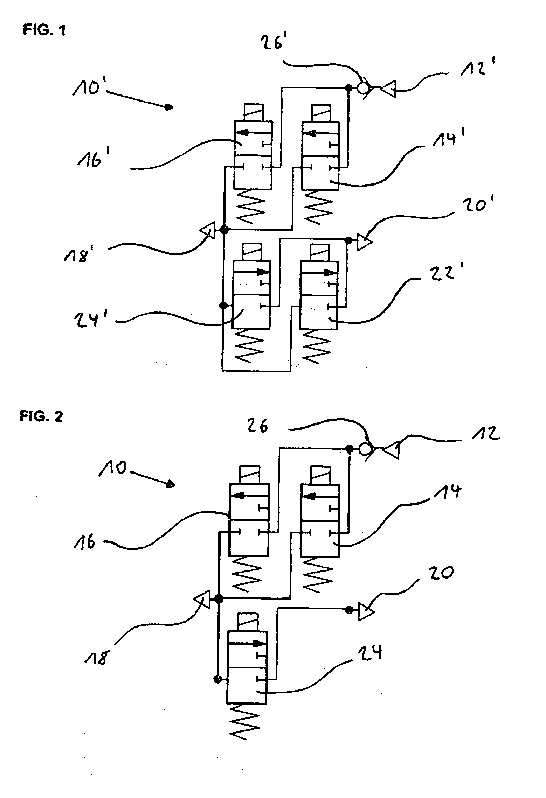

Gattungsgemäße, dem Stand der Technik angehörende Vorrichtungen werden beispielsweise im Zusammenhang mit Steuerungen/Regelungen von Ein- und Ausrückbewegungen von Kupplungen von Fahrzeugen mit automatisierten Schaltgetrieben eingesetzt. Um die Kupplung zur Durchführung von deren Ein- und Ausrückbewegung zu betätigen, können unterschiedliche Kupplungsaktuatoren beziehungsweise Kupplungssteiler verwendet werden, die je nach Anwendungsfall elektrisch, pneumatisch oder hydraulisch angesteuert werden. Häufig werden zur Steuerung/Regelung des Ein-/ Ausrückwegs der Kupplung Positionssensoren eingesetzt, über die die aktuelle Stellung der Kupplung erfasst und darauf basierend der Kupplungsaktuator gestellt beziehungsweise angesteuert werden kann. Im Falle eines pneumatischen Aktuators zur Kupplungsbetätigung, beispielsweise eines Zentralausrückers für eine Kupplung, werden üblicherweise Vorrichtungen mit zwei Ventileinrichtungen, einer ersten und zweiten Ventileinrichtung, verwendet, wie beispielsweise im Zusammenhang mit Figur 1 gezeigt ist. Im dargestellten Fall umfasst die erste Ventileinrichtung zwei parallel geschaltete 2/2-Wegemagnetventile 14', 16' (nachstehend kurz als 2/2-Wegeventile bezeichnet), die jeweils mit einem Druckluftversorgungsanschluss 12' und einem Aktuatoranschluss 18' gekoppelt sind. Je nach Schaltstellung des entsprechenden 2/2-Wegeventils 14', 16' kann somit eine Verbindung zwischen dem Druckluftversorgungsanschluss 12' und dem Aktuatoranschluss 18' durch eines oder beide 2/2-Wegeventile 14', 16' hergestellt werden. Auf diese Weise kann ein mit dem Aktuatoranschluss 18' gekoppelter, nicht in Figur 1 dargestellter Aktuator mit Druckluft versorgt werden, die beispielsweise von einer mit dem Druckluftversorgungsanschluss 12' gekoppelten, nicht in Figur 1 dargestellten Druckluftquelle, insbesondere einem Kompressor oder einem Druckluftspeicher, zur Verfügung gestellt wird. Um einen Druckabbau am Aktuator über die erste Ventileinrichtung zu verhindern, ist der ersten Ventileinrichtung ein Rückschlagventil 26' vorgeschaltet und dem Druckluftversorgungsanschluss 12' nachgeschaltet. Das Rückschlagventil 26' sperrt dabei in Richtung des Druckluftversorgungsanschlusses 12'. Um das Ausmaß der Druckluftversorgung beziehungsweise die Druckluftzufuhr zum Aktuator genauer steuern/regeln zu können, sind das erste und zweite 2/2-Wegeventil14', 16' üblicherweise unterschiedlich ausgeführt. So weist das erste 2/2-Wegeventil 14' in einer Durchlassstellung einen großen Strömungsquerschnitt beziehungsweise Durchflussquerschnitt auf, während das zweite 2/2-Wegeventil16' einen im Vergleich zum Durchflussquerschnitt des ersten 2/2-Wegeventils 14' kleinen Durchflussquerschnitt in einer Durchlassstellung aufweist. Dementsprechend kann die Druckluft von dem Druckluftversorgungsanschluss 12' durch das erste 2/2-Wegeventil 14' mit einem ersten Volumenstrom und durch das zweite 2/2-Wegeventil 16' mit einem zweiten Volumenstrom, der kleiner als der erste Volumenstrom ist, strömen. Diese Anordnung der unterschiedlich ausgelegten 2/2-Wegeventile 14', 16' dient zum einen der Verbesserung der Regelgüte, da jeweils ein 2/2-Wegeventil 14' mit großem und ein 2/2-Wegeventil 16' mit kleinem Durchfluss- beziehungsweise Strömungsquerschnitt eingesetzt wird. Somit lässt sich der Druckaufbau am Aktuator genauer steuern/regeln. Zum anderen wird weiterhin eine Redundanz bei Ausfall eines der 2/2-Wegeventile 14', 16' geschaffen, so dass der Druckaufbau am Aktuator auch mit nur einem der 2/2-Wegeventile 14', 16' vorgenommen werden kann. In analoger Weise umfasst die zweite Ventileinrichtung ebenso zwei zueinander parallel geschaltete und wie bei der ersten Ventileinrichtung ausgelegte 2/2-Wegeventile 22', 24', die jeweils mit dem Aktuatoranschluss 18' und einem Druckluftablass 22' gekoppelt sind, so dass ein Druckabbau am Aktuator über die zweite Ventileinrichtung vorgenommen werden kann. Beispielsweise kann die Druckluft über den Druckluftablass 22' in eine Umgebung des Fahrzeugs abgelassen werden, wodurch der Druck im/am Aktuator abgebaut werden kann. Ein Nachteil dieser redundanten Auslegung der 2/2-Wegeventile der ersten und zweiten Ventileinrichtung ist in den relativ hohen Kosten zu sehen.

Das Dokument WO 2007/028863 A1 beschreibt ein Verfahren zum Entdecken von Fehlern in einem Ventilsystem und zum fehlertoleranten Steuern eines solchen Ventilsystems. Insbesondere wird das Verwenden von Ventilanordnungen beschrieben, die als digitale Strömungssteuereinrichtungen ausgebildet sind. Dabei enthält jede dieser digitalen Strömungssteuereinheiten eine Vielzahl von Ventilen mit unterschiedlichen Strömungsquerschnitten. Bei einer Fehlfunktion eines einzelnen Ventils in einer Ventilanordnung werden Ventile anderer Ventilanordnungen dazu optimiert angesteuert, um insgesamt einen Strömungsquerschnitt zu bieten, der dem gewünschten Strömungsquerschnitt möglichst nahe kommt.

Das Dokument DE 101 03 842 A1 beschreibt eine Ventilanordnung zur Dosierung einer Kupplungsbetätigung über ein Zufuhrventil und ein Abführventil, die unabhängig voneinander betätigbar sind. Durch gezieltes Ansteuern des Zufuhrventils und des Abführventils wird eine exakte Dosierbarkeit eines Mediumstroms zur Kupplung hin oder von der Kupplung weg erfolgen.

Das Dokument EP 1 614 947 A1 beschreibt im Wesentlichen ein elektrohydraulisches Steuerventil. Ein solches Ventil kann in einer Schaltungsanordnung verwendet werden, bei der ein Zylinder druckunabhängig mit wechselnder Last angesteuert wird.

Der Erfindung liegt daher die Aufgabe zugrunde, die gattungsgemäßen Vorrichtungen sowie die gattungsgemäßen Verfahren zum Stellen von Aktuatoren derart weiterzubilden, dass die hierfür entstehenden Kosten zumindest teilweise reduziert werden können.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die erfindungsgemäße Vorrichtung baut auf dem gattungsgemäßen Stand der Technik dadurch auf, dass die zweite Ventileinrichtung lediglich ein Magnetventil umfasst, über das der Druck am Aktuator abbaubar ist. Erfindungsgemäß umfasst die erste Ventileinrichtung in diesem Fall zumindest zwei parallelgeschaltete Magnetventile zum Druckaufbau am Aktuator, um eine Redundanz zu schaffen. Die Magnetventile der ersten Ventileinrichtung haben dabei unterschiedliche Strömungsquerschnitte, wie vorstehend erläutert, so dass diese mit unterschiedlichen Volumenströmen durchströmbar sind. Zum Druckabbau am Aktuator wird lediglich ein Magnetventil verwendet, über das der im oder am Aktuator aufgebaute Druck abbaubar ist. Somit können insgesamt die Kosten für die Ansteuerung des Aktuators eingespart werden, wobei die Regelgüte für die Ansteuerung des Aktuartors durch geeignete Ansteuerung der ersten Ventileinrichtung und des lediglich einen Magnetventils der zweiten Ventileinrichtung nicht zwangsweise verschlechtert wird. Zwar wird durch das Vorsehen von lediglich dem einen Magnetventil zum Druckabbau am Aktuator die Redundanz in dieser Hinsicht aufgehoben, die Anforderungen an das bestehende Sicherheitskonzept werden jedoch nicht reduziert. Für das Sicherheitskonzept ist eine Unterbrechung der Kraft- oder Drehmomentübertragung in einem Antriebsstrang des Fahrzeugs zwingend erforderlich. Demzufolge ist es zweckdienlich, die erste Ventileinrichtung weiterhin mit zwei Magnetventilen zur Druckbeaufschlagung des Aktuators beziehungsweise zum Druckaufbau am Aktuator auszustatten, um die Redundanz in diesem Zusammenhang beizubehalten. Insbesondere in dem Fall, bei dem eine Komponente des Fahrzeugs ausfällt, muss in jedem Fall gewährleistet werden, die Kupplung bei Ausfall der Komponente öffnen beziehungsweise die Kraft- oder Drehmomentübertragung im Antriebstrang des Fahrzeugs unterbrechen zu können. Aus diesem Grund werden bevorzugt weiterhin zwei parallel geschaltete Magnetventile zur Druckbeaufschlagung des Aktuators, im Falle eines pneumatischen Aktuators zwei Belüfte-Magnetventile, verwendet. Die Herstellung der Kraft- oder Drehmomentübertragung im Antriebsstrang kann im Fehlerfall als weniger sicherheitskritisch betrachtet werden, da in diesem Fehlerfall das Fahrzeug beispielsweise während der Fahrt durch Abbremsen zum Stillstand gebracht werden kann oder im Stillstand kein Anfahren mehr möglich ist. Daher entfällt bei der erfindungsgemäßen Vorrichtung zumindest ein Magnetventil, wobei die Regelgüte nicht reduziert wird. Bei sämtlichen Ausführungen der erfindungsgemäßen Vorrichtung mit dem als Entlüfteventil ausgebildeten Magnetventil der zweiten Ventileinrichtung können sämtliche weitere Volumenstrom beeinflussende Einrichtungen in das Magnetventil integriert werden, wie beispielsweise ein Ablassventil, Boosterventil etc. Getrennt von dem Magnetventil der zweiten Ventileinrichtung ausgebildete Volumenstrom beeinflussende Einrichtungen sind ebenso denkbar.

Die gattungsgemäße Vorrichtung ist so ausgebildet, dass die erste Ventileinrichtung ein erstes und zweites Magnetventil umfasst, wobei das erste Magnetventil mit einem ersten Volumenstrom und das zweite Magnetventil mit einem zweiten Volumenstrom, der kleiner als der erste Volumenstrom ist, zur Druckbeaufschlagung des Aktuators durchströmbar sind. Vorzugsweise wird für das erste Magnetventil ein 2/2-Wegeventil mit einer Nennweite von 2,5 mm verwendet. Somit kann durch das erste Magnetventil ein schneller Druckaufbau am Aktuator und damit ein schnelles Öffnen des Antriebsstrangs (Unterbrechung der Kraft- oder Drehmomentübertragung) bewirkt werden. Das zweite Magnetventil ist bevorzugt ein 2/2-Wegeventil mit einer Nennweite von 1,5 mm zur feinen Steuerung/Regelung des Druckaufbaus am Aktuator, beispielsweise zur Steuerung/Regelung einer im schleifenden Zustand befindlichen Kupplung zur verringerten Kraft- oder Drehmomentübertragung im Antriebsstrang des Fahrzeugs.

In diesem Zusammenhang kann die erfindungsgemäße Vorrichtung in vorteilhafter Weise derart weitergebildet werden, dass das Magnetventil der zweiten Ventileinrichtung mit einem dem ersten Volumenstrom entsprechenden Volumenstrom durchströmbar ist, um einen Druckabbau am Aktuator zu bewirken. Vorzugsweise wird das Magnetventil der zweiten Ventileinrichtung mit einer Nennweite beziehungsweise einem Strömungsquerschnitt ausgelegt, so dass es in einer Durchlassstellung mit dem ersten Volumenstrom entsprechend dem des ersten Magnetventils der ersten Ventileinrichtung durchströmt werden kann. Durch geeignete Regelung oder Steuerung der ersten und zweiten Ventileinrichtung lässt sich auch mit nur einem Magnetventil der ersten Ventileinrichtung ein langsamer Druckabbau am Aktuator trotz der großen Nennweite von 2,5 mm erzielen.

Vorzugsweise wird die erfindungsgemäße Vorrichtung dann so verwirklicht, dass das mit dem zweiten Volumenstrom durchströmbare zweite Magnetventil der ersten Ventileinrichtung und das mit dem ersten Volumenstrom durchströmbare Magnetventil der zweiten Ventileinrichtung in eine Durchlassstellung schaltbar sind, um den Druck am Aktuator im Wesentlichen mit einem Volumenstrom entsprechend dem zweiten Volumenstrom abzubauen. Durch geeignete Regelung der Ventile der ersten und zweiten Ventileinrichtung kann trotz des mit größerer Nennweite ausgelegten Magnetventils der zweiten Ventileinrichtung ein langsamer Druckabbau am Aktuartor erzielt werden. So wird vorzugsweise bei in Durchlassstellung befindlichem Magnetventil der zweiten Ventileinrichtung gleichzeitig das zweite Magnetventil der ersten Ventileinrichtung in Durchlassstellung geschaltet, während das erste Magnetventil der ersten Ventileinrichtung in Sperrstellung geschaltet ist. Dadurch wird der Druckabbau am Aktuator teilweise kompensiert, da während der abfließende größere erste Volumenstrom abgelassen wird, der zufließende kleinere zweite Volumenstrom dem Aktuator zugeführt wird. Vorzugsweise wird diese Art des Betriebs der Magnetventile nur dann vorgenommen, wenn dies zwingend erforderlich ist, da dieser Betrieb zu einer direkten Entlüftung des Vorratsdruckes des Druckspeichers führt. Daher wird dieser Zustand der Magnetventile nur sehr kurzzeitig eingestellt.

Alternativ kann die erfindungsgemäße Vorrichtung derart ausgestaltet werden, dass das Magnetventil der zweiten Ventileinrichtung ein Proportionalventil ist, über das ein Volumenstrom zum Druckabbau am Aktuator proportional zu einem Ansteuersignal des Proportionalventils einstellbar ist. Somit kann der Druckabbau am Aktuator lediglich über nur ein Entlüftungsventil mit variablem Strömungs- beziehungsweise Durchflussquerschnitt vorgenommen werden. Dadurch lässt sich die Regelgüte im Vergleich zur Verwendung eines Magnetventils mit konstantem Querschnitt verbessern. Im Falle eines pneumatischen Aktuators wird das Proportionalventil als pneumatisches Proportionalventil umgesetzt.

In einer weiteren Ausgestaltung der erfindungsgemäßen Vorrichtung ist vorgesehen, dass das Magnetventil der zweiten Ventileinrichtung derart ausgebildet ist, dass es zumindest zwei Durchlassstellungen einnehmen kann, über die der erste und zweite Volumenstrom zum Druckabbau am Aktuator jeweils einstellbar sind. So kann beispielsweise ein zweistufiges Magnetventil vorgesehen sein, dessen Ventilkolben durch geeignete Ansteuerung in zwei Durchlassstellungen bringbar ist. Alternativ lässt sich auch ein Magnetventil realisieren, das zwei Ventilsitze und einen Ventilkolben aufweist, wobei über die Ventilsitze mit entsprechender Durchlassstellung des Ventilkolbens der erste und zweite Volumenstrom eingestellt werden können. Mit einem 2-stufigen als Entlüfteventil ausgebildeten Magnetventil wird die Ansprechzeit des Magnetventils beim Umschalten von Klein- auf Großsignal reduziert, so dass die Regelung sogar verbessert werden kann.

In dieser Hinsicht kann die erfindungsgemäße Vorrichtung so weitergebildet werden, dass den zwei Durchlassstellungen des Magnetventils der zweiten Ventileinrichtung unterschiedlich hohe magnetische Kräfte zugeordnet sind, um das Magnetventil in die entsprechende Durchlassstellung zu bringen. So lassen sich im Falle des zweistufigen Magnetventils die verschiedenen Strömungsquerschnitte und damit die entsprechenden Volumenströme durch unterschiedliche magnetische Kräfte einstellen, die beispielsweise über eine Magnetspule auf den Ventilkolben übertragbar sind. Als mechanische Unterstützung zur genauen Einstellung der Zwischenstufe, das heißt der ersten der zwei Stufen, können zwei verschiedene Gegendruckfedern, die den Ventilkolben gegen die magnetischen Kräfte vorspannen, eingesetzt werden. Dabei liefert beispielsweise die erste Gegendruckfeder bis zur Zwischenstufe die erforderliche Gegenkraft, wobei bei weiterer Öffnung des Magnetventils die zusätzliche zweite Gegenfeder mit dem Ventilkolben in Eingriff gelangt, so dass zum vollständigen Öffnen des Ventils eine höhere magnetische Kraft erforderlich ist. Im Fall eines Magnetventils mit zwei Ventilsitzen sind verschiedene Ausgestaltungen des Magnetventils denkbar. So können unterschiedliche Bestromungen der Magnetspule des Magnetventils vorgenommen werden, wodurch sich der Ventilkolben beispielsweise bei kleiner Bestromung in Richtung zum ersten Ventilsitz bewegen lässt und das Magnetventil geöffnet wird. Hingegen wird der zweite Ventilsitz bei voller Bestromung und vollem Ventilkolbenhub geöffnet, so dass bei vollem Ventilhub dann beide Ventilsitze geöffnet sind. Jedoch kann die Anordnung der Ventilsitze mit entsprechender Ausgestaltung des Magnetventils beliebig sein. Beispielsweise können die Ventilsitze nebeneinander, gegenüber, hintereinander oder ineinander verschachtelt ausgeführt werden. Die Erzeugung der notwendigen einzustellen magnetischen Kräfte kann auf unterschiedliche Weisen erfolgen. Beispielsweise lässt sich der Magnetventilstrom über eine PWM-Ansteuerung (PWM=Pulsweitenmodulation) regeln. Um beispielsweise unterschiedliche magnetische Kräfte hervorzurufen, können insbesondere auch zwei Magnetspulenwicklungen für das Magnetventil verwendet werden; beispielsweise wird für die Zwischenstufe nur eine der Wicklungen bestromt, wohingegen für die Endstufe beziehungsweise zweite Stufe beide Wicklungen bestromt werden. Der Vorteil dieses mit zwei Magnetspulenwicklungen ausgestalteten Magnetventils liegt in der vollständigen elektrischen Kompatibilität zu dem vorstehend erläuterten, dem Stand der Technik angehörenden Magnetventilblock mit den vier einzelnen Magnetventilen (Figur 1). Auch im Falle lediglich einer Magnetspulenwicklung können die unterschiedlichen magnetischen Kräfte durch jeweiliges Anlegen von einer Spannung von beispielsweise 12V und 24V bewerkstelligt werden, so dass quasi zwei mit der jeweiligen Spannung korrelierende Kraftniveaus entstehen. Alternativ kann auch vorgesehen sein, dass das Magnetventil einen Permanentmagnet und eine Magnetspule umfasst, die so angeordnet sind, dass zum Erreichen einer Neutralstellung der Elektromagnet so bestromt wird, dass die Kräfte der Magnete, das heißt der Spule und des Permanentmagneten, sich kompensieren. Wird der Elektromagnet abgeschaltet, so öffnet der Permanentmagnet das Magnetventil an dessen kleinen Ventilsitz. Für das Öffnen des Magnetventils an dessen großen Ventilsitz muss der Elektromagnet so stark bestromt werden, dass er die auf den Ventilkolben vom Permanentmagnet aufgebrachte Kraft und die Druckkraft überwindet. Die Ventilsitze liegen zu diesem Zweck vorzugsweise einander gegenüber.

In einer weiteren Ausführung der erfindungsgemäßen Vorrichtung ist vorgesehen, dass das Magnetventil der zweiten Ventileinrichtung mit einem dem zweiten Volumenstrom entsprechenden Volumenstrom durchströmbar ist, um einen Druckabbau am Aktuator zu bewirken. Auch kann das Magnetventil der zweiten Ventileinrichtung derart ausgelegt sein, dass es mit kleiner Nennweite beziehungsweise kleinerem Durchflussquerschnitt in dessen Durchlassstellung durchströmbar ist.

In diesem Zusammenhang kann die erfindungsgemäße Vorrichtung so weitergebildet werden, dass dem Magnetventil der zweiten Ventileinrichtung ein druckbetätigbares Ablassventil vorgeschaltet ist, das in einer geöffneten Stellung zum Druckabbau am Aktuator über einen Ablass dient und das zu einer mit dem zweiten Volumenstrom durchströmbaren Drosselung parallel geschaltet und derart ausgebildet ist, dass das druckbetätigbare Ablassventil öffnet, wenn das Magnetventil der zweiten Ventileinrichtung in Durchlassstellung zum Druckabbau am Aktuator geschaltet ist und ein Druck vor der Drosselung einen vorbestimmten Wert überschreitet. In diesem Fall ist das Magnetventil der zweiten Ventileinrichtung als ein Entlüftungsventil mit kleiner Nennweite im Vergleich zu dem ersten Magnetventil der ersten Ventileinrichtung ausgebildet. Zusätzlich ist im Falle eines pneumatischen Aktuators zur Durchführung einer pneumatischen Schnellentlüftung ein druckbetätigbares Ablassventil vorgesehen, das dem Magnetventil der zweiten Ventileinrichtung vorgeschaltet ist und zu einer Drosselung beziehungsweise Drossel oder Blende parallel geschaltet ist. Die Drosselung ist dabei ebenso wie das Magnetventil der zweiten Ventileinrichtung mit dem zweiten Volumenstrom durchströmbar, weist also einen im Wesentlichen gleichen Strömungsquerschnitt auf. Durch die Parallelschaltung des Ablassventils und der Drosselung vor das Magnetventil der zweiten Ventileinrichtung wird eine zeitlich begrenzte Entlüftung nur durch das Magnetventil der zweiten Ventileinrichtung erzielt. Bei länger anhaltender Durchlassstellung des Magnetventils der zweiten Ventileinrichtung kann sich der Druck vor der Drosselung derart erhöhen, dass er einen vorbestimmten Wert überschreitet und über das Ablassventil ein zusätzliches Volumen entlüftet wird. Das Ablassventil fungiert in diesem Fall als ein pneumatisches Schnellentlüftungsventil.

Die erfindungsgemäße Vorrichtung kann in diesem Fall so verwirklicht werden, dass das druckbetätigbare Ablassventil derart ausgebildet ist, das es in einer Sperrstellung des Magnetventils der zweiten Ventileinrichtung schließt. Wird das Magnetventil der zweiten Ventileinrichtung geschlossen, so führt dies unmittelbar zum Schließen des Ablassventils, so dass kein weiterer Druckabbau am Aktuator erfolgt.

Die erfindungsgemäße Vorrichtung kann auch derart ausgebildet werden, dass das Magnetventil der zweiten Ventileinrichtung ausschließlich über ein druckbetätigbares Ablassventil mit dem Aktuator gekoppelt ist. So kann durch entsprechende Ausgestaltung des Ablassventils auf eine Drosselung, die parallel zum Ablassventil geschaltet ist, verzichtet werden.

In diesem Zusammenhang kann die erfindungsgemäße Vorrichtung so weitergebildet werden, dass das druckbetätigbare Ablassventil derart ausgebildet ist, dass es eine mit dem zweiten Volumenstrom durchströmbare permanente Verbindung zwischen dem Magnetventil der zweiten Ventileinrichtung und dem Aktuator umfasst und zum Druckabbau über einen Ablass öffnet, wenn der Druck vor dem druckbetätigbaren Ablassventil einen vorbestimmten Wert überschreitet. Eine derartige Ausgestaltung des Ablassventils führt somit zu einer Einsparung der Drosselung, da diese quasi in das Ablassventil integriert ist.

In einer Ausführung der erfindungsgemäßen Vorrichtung kann daher vorgesehen sein, dass die permanente Verbindung durch eine Bohrung in einem Ventilkolben des Ablassventils ausgebildet wird. Das als Entlüftungsventil fungierende Ablassventil kann in diesem Fall als ein Ablassventil mit einem Ventilsitz und einem Ventilkolben ausgebildet werden. Der Ventilkolben weist dabei ein Loch beziehungsweise eine Bohrung, vorzugsweise in einem Ventilkolbenabsatz, auf, um die permanente Verbindung zwischen dem Aktuator und dem Magnetventil der zweiten Ventileinrichtung herzustellen. Somit wird bei zeitlich begrenzter Ansteuerung des Magnetventils der zweiten Ventileinrichtung, das heißt das Magnetventil befindet sich in dessen Durchlassstellung beziehungsweise geöffneter Stellung, mit dem zweiten Volumenstrom entlüftet werden. Bei längerer Ansteuerung und entsprechenden Druckanstieg zwischen dem Ablassventil und dem Aktuator öffnet das Ablassventil und ein zusätzliches Volumen wird über den Ablass des Ablassventils entlüftet. Das Ablassventil kann dabei als ein so genanntes pneumatisches Boosterventil ausgeführt werden. Auch in diesem Fall schließt das Ablassventil unmittelbar bei Umschaltung des Magnetventils der zweiten Ventileinrichtung in dessen Sperrstellung.

In einer alternativen Ausführungsform kann die erfindungsgemäße Vorrichtung so ausgestaltet werden, dass die permanente Verbindung durch eine Bohrung in einer Membran des Ablassventils ausgebildet wird. In diesem Fall ist das Ablassventil mit einer Membran ausgebildet, die mit einem Loch beziehungsweise einer Bohrung versehen ist. Vorzugsweise ist an einen Zentrumsbereich der Membran ein Ventilkolben angeordnet, über den ein Ventilsitz des Ablassventils verschließbar ist.

In einer weiteren Ausgestaltung der erfindungsgemäßen Vorrichtung kann vorgesehen sein, dass dem Magnetventil der zweiten Ventileinrichtung eine mit dem zweiten Volumenstrom durchströmbare Drosselung und ein der Drosselung vorgeschaltetes druckbetätigbares Ablassventil nachgeschaltet sind, wobei das druckbetätigbare Ablassventil derart ausgebildet ist, dass es zum Druckabbau über einen Ablass öffnet, wenn ein Druck zwischen der Drosselung und dem Magnetventil der zweiten Ventileinrichtung einen vorbestimmten Wert überschreitet. In diesem Fall ist das Magnetventil vorzugsweise mit dem ersten Volumenstrom durchströmbar, wobei die Drosselung mit dem zweiten Volumenstrom durchströmbar ist. Somit erhöht sich der Druck zwischen dem Magnetventil und der Drosselung bei zeitlich begrenzter Ansteuerung des Magnetventils der zweiten Ventileinrichtung, das heißt bei in Durchlassstellung befindlichem oder geöffnetem Magnetventil. Überschreitet dieser Druck einen vorbestimmten Wert, das heißt bei zeitlich längerer Ansteuerung des Magnetventils, so öffnet das zwischen dem Magnetventil und der Drosselung angeordnete Ablassventil. Dadurch kann ein zusätzliches Volumen über einen Ablass des Ablassventils entlüftet werden. Vorzugsweise wird das Ablassventil als ein pneumatisches Boosterventil im Falle eines pneumatischen Aktuators ausgeführt.

In einer weiteren Ausgestaltung der erfindungsgemäßen Vorrichtung kann vorgesehen sein, dass dem Magnetventil der zweiten Ventileinrichtung eine aktuatorisch ansteuerbare Drosselung vorgeschaltet ist, über die ein Volumenstrom zum Magnetventil der zweiten Ventileinrichtung bis maximal auf den ersten Volumenstrom einstellbar ist. In diesem Fall ist das Magnetventil der zweiten Ventileinrichtung mit dem ersten Volumenstrom durchströmbar, während die variable Drosselung maximal auf einen Volumenstrom einstellbar ist, der dem ersten Volumenstrom entspricht, nämlich dem des Magnetventils. Die Drosselung kann in diesem Fall über einen Aktuator zur Querschnittsveränderung beziehungsweise Einstellung des Durchflussquerschnitts gestellt werden. Dabei kann der Aktuator der Drosselung elektromechanisch oder elektromagnetisch betrieben werden. Somit wird über die pneumatische Drossel der Entlüftungsquerschnitt eingestellt beziehungsweise auf ein vorgebbares Ausmaß begrenzt. Um den erforderlichen Kraftaufwand des Aktuators der Drosselung zur Einstellung des Durchflussquerschnitts zu begrenzen, kann dieser zunächst drucklos den Querschnitt einstellen, erst dann wird das als Entlüftungsventil ausgebildete Magnetventil der zweiten Ventileinrichtung geöffnet.

In einer bevorzugten Ausgestaltung der erfindungsgemäßen Vorrichtung kann vorgesehen sein, dass das Magnetventil der zweiten Ventileinrichtung ein 3/3-Wegeventil ist, das in einer mittleren Stellung eine Sperrstellung aufweist. Vorzugsweise hat das Magnetventil in dessen Mittelstellung für den daran anliegenden Druck eine Sperrwirkung und ist derart ausgestaltet, dass der Druck am Kolben in dessen mittleren Abschnitt anliegt. Jede Endposition öffnet eine unterschiedliche Düsenöffnung mit unterschiedlichem Durchflussquerschnitt.

Weiterhin kann die erfindungsgemäße Vorrichtung derart realisiert werden, dass der Aktuator derart ausgebildet ist, dass er bei Druckbeaufschlagung eine Kraft- oder Drehmomentübertragung in einem Antriebsstrang des Fahrzeugs durch eine Kupplung unterbricht und bei Druckabbau die Kraft- oder Drehmomentübertragung in dem Antriebsstrang über die Kupplung herstellt.

Das erfindungsgemäße Verfahren baut auf dem gattungsgemäßen Stand der Technik dadurch auf, dass die zweite Ventileinrichtung lediglich ein Magnetventil umfasst, über das der Druck am Aktuator abgebaut wird. Dadurch ergeben sich die im Zusammenhang mit der erfindungsgemäßen Vorrichtung erläuterten Eigenschaften und Vorteile in gleicher oder ähnlicher Weise, weshalb zur Vermeidung von Wiederholungen auf die entsprechenden Ausführungen im Zusammenhang mit der erfindungsgemäßen Vorrichtung verwiesen wird.

Gleiches gilt sinngemäß für die folgenden bevorzugten Ausführungsformen des erfindungsgemäßen Verfahrens, wobei zur Vermeidung von Wiederholungen auch diesbezüglich auf die entsprechenden Ausführungen im Zusammenhang mit der erfindungsgemäßen Vorrichtung verwiesen wird.

Das gattungsgemäße Verfahren ist so ausgebildet, dass ein erstes Magnetventil der ersten Ventileinrichtung mit einem ersten Volumenstrom und ein zweites Magnetventil der ersten Ventileinrichtung mit einem zweiten Volumenstrom, der kleiner als der erste Volumenstrom ist, zur Druckbeaufschlagung des Aktuators durchströmt werden kann.

In diesem Zusammenhang kann das erfindungsgemäße Verfahren in vorteilhafter Weise derart weitergebildet werden, dass das Magnetventil der zweiten Ventileinrichtung mit einem dem ersten Volumenstrom entsprechenden Volumenstrom durchströmt wird, um einen Druckabbau am Aktuator zu bewirken.

Vorzugsweise wird das erfindungsgemäße Verfahren dann so verwirklicht, dass das mit dem zweiten Volumenstrom durchströmbare zweite Magnetventil der ersten Ventileinrichtung und das mit dem ersten Volumenstrom durchströmbare Magnetventil der zweiten Ventileinrichtung in eine Durchlassstellung geschaltet werden, um den Druck am Aktuator im Wesentlichen mit einem Volumenstrom entsprechend dem zweiten Volumenstrom abzubauen.

Alternativ kann das erfindungsgemäße Verfahren auch so realisiert werden, dass das Magnetventil der zweiten Ventileinrichtung ein Proportionalventil ist, über das ein Volumenstrom zum Druckabbau am Aktuator proportional zu einem Ansteuersignal des Proportionalventils eingestellt wird.

Weiterhin lässt sich das erfindungsgemäße Verfahren so gestalten, dass das Magnetventil der zweiten Ventileinrichtung zumindest zwei Durchlassstellungen einnehmen kann, über die der erste und zweite Volumenstrom zum Druckabbau am Aktuator jeweils eingestellt werden.

In diesem Zusammenhang kann das erfindungsgemäße Verfahren derart umgesetzt werden, dass, um das Magnetventil der zweiten Ventileinrichtung in eine von zwei unterschiedlichen Durchlassstellungen zu bringen, eine magnetische Kraft entsprechend der ausgewählten Durchlassstellung aufgebracht wird, die sich von einer magnetischen Kraft der anderen Durchlassstellung unterscheidet.

In einer weiteren Ausführung des erfindungsgemäßen Verfahrens ist vorgesehen, dass das Magnetventil der zweiten Ventileinrichtung mit einem dem zweiten Volumenstrom entsprechenden Volumenstrom durchströmt wird, um einen Druckabbau am Aktuator zu bewirken.

In diesem Fall kann das erfindungsgemäße Verfahren so durchgeführt werden, dass dem Magnetventil der zweiten Ventileinrichtung ein druckbetätigbares Ablassventil vorgeschaltet ist, das in einer geöffneten Stellung zum Druckabbau am Aktuator über einen Ablass dient und das zu einer mit dem zweiten Volumenstrom durchströmbaren Drosselung parallel geschaltet ist, so dass das druckbetätigbare Ablassventil öffnet, wenn das Magnetventil der zweiten Ventileinrichtung in Durchlassstellung zum Druckabbau am Aktuator geschaltet ist und ein Druck vor der Drosselung einen vorbestimmten Wert überschreitet.

Darüber hinaus kann das erfindungsgemäße Verfahren dann so weitergebildet werden, dass das druckbetätigbare Ablassventil in einer Sperrstellung des Magnetventils der zweiten Ventileinrichtung schließt.

In einer weiteren Ausführung des erfindungsgemäßen Verfahrens kann vorgesehen sein, dass der Druckabbau am Aktuator ausschließlich über das Magnetventil der zweiten Ventileinrichtung und ein druckbetätigbares Ablassventil, das zwischen dem Magnetventil der zweiten Ventileinrichtung und dem Aktuator zwischengeschaltet ist, erfolgt.

In diesem Zusammenhang kann das erfindungsgemäße Verfahren derart ausgeführt werden, dass das druckbetätigbare Ablassventil eine mit dem zweiten Volumenstrom durchströmbare permanente Verbindung zwischen dem Magnetventil der zweiten Ventileinrichtung und dem Aktuator umfasst und zum Druckabbau über einen Ablass öffnet, wenn der Druck vor dem druckbetätigbaren Ablassventil einen vorbestimmten Wert überschreitet.

Ferner kann das erfindungsgemäße Verfahren dann so gestaltet werden, dass die permanente Verbindung, die durch eine Bohrung in einem Ventilkolben des Ablassventils ausgebildet ist, von dem zweiten Volumenstrom bei in Durchlassstellung befindlichem Magnetventil der zweiten Ventileinrichtung durchströmt wird.

Alternativ kann das erfindungsgemäße Verfahren dergestalt sein, dass die permanente Verbindung, die durch eine Bohrung in einer Membran des Ablassventils ausgebildet ist, von dem zweiten Volumenstrom bei in Durchlassstellung befindlichem Magnetventil der zweiten Ventileinrichtung durchströmt wird.

In einer weiteren Ausführung des erfindungsgemäßen Verfahrens kann vorgesehen sein, dass dem Magnetventil der zweiten Ventileinrichtung eine mit dem zweiten Volumenstrom durchströmbare Drosselung und ein der Drosselung vorgeschaltetes druckbetätigbares Ablassventil nachgeschaltet sind, wobei das druckbetätigbare Ablassventil zum Druckabbau über einen Ablass öffnet, wenn ein Druck zwischen der Drosselung und dem Magnetventil der zweiten Ventileinrichtung einen vorbestimmten Wert überschreitet.

Weiterhin kann das erfindungsgemäße Verfahren auch so verwirklicht werden, dass über eine aktuatorisch ansteuerbare, dem Magnetventil der zweiten Ventileinrichtung vorgeschaltete Drosselung ein Volumenstrom zum Magnetventil der zweiten Ventileinrichtung bis maximal auf den ersten Volumenstrom eingestellt wird.

Darüber hinaus lässt sich das erfindungsgemäße Verfahren so weiterbilden, dass das Magnetventil der zweiten Ventileinrichtung ein 3/3-Wegeventil ist, das in eine Sperrstellung, die eine mittlere Stellung des 3/3-wegeventils darstellt, geschaltet wird, wenn ein Druckabbau am Aktuator unterbunden werden soll.

Bevorzugt wird das erfindungsgemäße Verfahren derart verwirklicht, dass der Aktuator bei Druckbeaufschlagung eine Kraft- oder Drehmomentübertragung in einem Antriebsstrang des Fahrzeugs durch eine Kupplung unterbricht und bei Druckabbau die Kraft- oder Drehmomentübertragung in dem Antriebsstrang über die Kupplung herstellt.

Die Erfindung wird nun mit Bezug auf die begleitenden Zeichnungen anhand bevorzugter Ausführungsformen beispielhaft erläutert.

Es zeigen:
- Figur 1: eine Darstellung einer dem Stand der Technik angehörenden Vorrichtung zum Stellen eines Aktuators;
- Figur 2: eine Darstellung einer erfindungsgemäßen Vorrichtung zum Stellen eines Aktuators gemäß einem ersten Ausführungsbeispiel der Erfindung;
- Figur 3: eine Darstellung eines Magnetventils der erfindungsgemäßen Vorrichtung gemäß einem zweiten Ausführungsbeispiel der Erfindung;
- Figur 4: eine Darstellung einer nicht beanspruchten Vorrichtung zum Stellen eines Aktuators gemäß einem dritten Ausführungsbeispiel;
- Figur 5: eine Darstellung der erfindungsgemäßen Vorrichtung zum Stellen eines Aktuators gemäß einem vierten Ausführungsbeispiel der Erfindung;
- Figur 6: eine Darstellung der erfindungsgemäßen Vorrichtung zum Stellen eines Aktuators gemäß einem fünften Ausführungsbeispiel der Erfindung;
- Figur 7: eine Darstellung der erfindungsgemäßen Vorrichtung zum Stellen eines Aktuators gemäß einem sechsten Ausführungsbeispiel der Erfindung;
- Figur 8: eine Darstellung der erfindungsgemäßen Vorrichtung zum Stellen eines Aktuators gemäß einem siebten Ausführungsbeispiel der Erfindung;
- Figur 9: eine Darstellung der erfindungsgemäßen Vorrichtung zum Stellen eines Aktuators gemäß einem achten Ausführungsbeispiel der Erfindung; und
- Figur 10: eine Darstellung einer nicht beanspruchten Vorrichtung zum Stellen eines Aktuators gemäß einem neunten Ausführungsbeispiel.

Figur 2 zeigt eine Darstellung einer erfindungsgemäßen Vorrichtung 10 zum Stellen eines Aktuators (nicht dargestellt) gemäß einem ersten Ausführungsbeispiel der Erfindung. In diesem Ausführungsbeispiel handelt es sich um einen pneumatischen Aktuator, der eine Kupplung eines Fahrzeugs mit automatisiertem Schaltgetriebe betätigt. Die erfindungsgemäße Vorrichtung 10 zum Stellen des Aktuators umfasst im dargestellten Fall eine erste Ventileinrichtung und eine zweite Ventileinrichtung. Dabei weist die erste Ventileinrichtung ein erstes, als 2/2-Wegeventil ausgeführtes Magnetventil 14 und ein zweites, als 2/2-Wegeventil ausgeführtes Magnetventil 16 auf. Beide Magnetventile 14 und 16 sind über einen Druckluftversorgungsanschluss 12 mit einer Druckluftquelle, beispielsweise einem Kompressor oder einem Druckluftspeicher, gekoppelt. Weiterhin sind beide Magnetventile 14 und 16 der ersten Ventileinrichtung über einen Aktuatoranschluss 18 mit einem nicht dargestellten pneumatischen Aktuator gekoppelt. Darüber hinaus ist ein Rückschlagventil 26 zwischen dem Druckluftversorgungsanschluss 12 und einem Verzweigungspunkt, über den beide Magnetventile 14 und 16 mit dem Druckluftversorgungsanschluss 12 gekoppelt sind, vorgesehen. Dabei sperrt das Rückschlagventil 26 in Richtung des Druckluftversorgungsanschlusses 12 und verhindert dadurch einen Druckluftabbau am Aktuator über die erste Ventileinrichtung. Die zweite Ventileinrichtung umfasst im dargestellten Fall lediglich ein als 2/2-Wegeventil ausgebildetes Magnetventil 24, das mit dem nicht dargestellten Aktuator über den Aktuatoranschluss 18 gekoppelt ist. Weiterhin ist das Magnetventil 24 über einen Luftablass 20 mit beispielsweise einer Umgebung des Fahrzeugs gekoppelt. Das erste Magnetventil 14 der ersten Ventileinrichtung weist einen Strömungsquerschnitt beziehungsweise Durchflussquerschnitt auf, durch den Luft mit einem ersten Volumenstrom strömen kann, wenn sich das erste Magnetventil 14 in einer Durchlassstellung befindet. Hingegen weist das zweite Magnetventil 16 der ersten Ventileinrichtung einen kleineren Strömungsquerschnitt als der des ersten Magnetventils 14 auf, der mit einem zweiten Volumenstrom in einer Durchlassstellung des zweiten Magnetventils 16 durchströmbar ist. Der zweite Volumenstrom ist in diesem Fall somit kleiner als der erste Volumenstrom. In diesem Ausführungsbeispiel weist das Magnetventil 24 der zweiten Ventileinrichtung einen Strömungsquerschnitt auf, der mit einem dem ersten Volumenstrom entsprechenden Volumenstrom durchströmbar ist, wenn sich das Magnetventil 24 der zweiten Ventileinrichtung in dessen Durchlassstellung befindet. Vorzugsweise wird das Magnetventil 24 der zweiten Ventileinrichtung daher mit einem Strömungsquerschnitt ausgebildet, der dem des ersten Magnetventils 14 der ersten Ventileinrichtung entspricht. Die Magnetventile der ersten und zweiten Ventileinrichtung werden durch eine nicht dargestellte Steuereinrichtung jeweils angesteuert, so dass sie separat in deren Durchlassstellung oder eine Sperrstellung schaltbar sind.

Zur Durchführung des erfindungsgemäßen Verfahrens wird eines der Magnetventile 14, 16 der ersten Ventileinrichtung in dessen Durchlassstellung geschaltet. Je nachdem, mit welchem Volumenstrom der Aktuator mit Druck beaufschlagt beziehungsweise mit Druckluft versorgt werden soll, wird das entsprechende Magnetventil 14, 16 in dessen Durchlassstellung geschaltet. Im Falle einer schnellen Belüftung des Aktuators wird das erste Magnetventil 14 der ersten Ventileinrichtung in Durchlassstellung geschaltet. Soll hingegen der Aktuator langsam belüftet werden, so wird das zweite Magnetventil 16 der ersten Ventileinrichtung in dessen Durchlassstellung geschaltet. Während dieses Vorgangs beziehungsweise während des Belüftungsvorgangs befindet sich das Magnetventil 24 der zweiten Ventileinrichtung in dessen Sperrstellung, so dass keine Entlüftung in Richtung des Luftablasses 20 stattfinden kann. Bei der Entlüftung des Aktuators werden die Ventile 14, 16 der ersten Ventileinrichtung in deren Sperrstellung geschaltet, so dass keine weitere Druckluftversorgung zum Aktuator stattfindet. Auch wird ein Druckabbau über die erste Ventileinrichtung durch das Rückschlagventil 26 verhindert. Gleichzeitig wird das Magnetventil 24 der zweiten Ventileinrichtung in dessen Durchlassstellung geschaltet, wodurch der Aktuator mit dem ersten Volumenstrom über das Magnetventil 24 und den Luftablass 20 entlüftet wird. In diesem Fall findet eine schnelle Entlüftung des Aktuators statt. Soll hingegen eine langsamere Entlüftung des Aktuators vorgenommen werden, so wird zusätzlich das zweite Magnetventil 16 der ersten Ventileinrichtung in dessen Durchlassstellung geschaltet. Dadurch strömt Druckluft von der Druckluftquelle über den Druckluftversorgungsanschluss 12 und das zweite Magnetventil 16 mit dem zweiten Volumenstrom zum Aktuator, während gleichzeitig mit dem ersten Volumenstrom über das Magnetventil 24 entlüftet wird. Dadurch wird eine langsame Entlüftung des Aktuators trotz der Entlüftung des Aktuators über das Magnetventil 24 mit dem ersten Volumenstrom vorgenommen, da dem Aktuator gleichzeitig der zweite Volumenstrom, der kleiner als der erste Volumenstrom ist, zugeführt wird. Dementsprechend kann durch geeignete Ansteuerung der beider Ventileinrichtungen auf ein zweites Magnetventil der zweiten Ventileinrichtung mit einem Strömungsquerschnitt, der mit dem zweiten Volumenstrom durchströmbar ist, verzichtet werden.

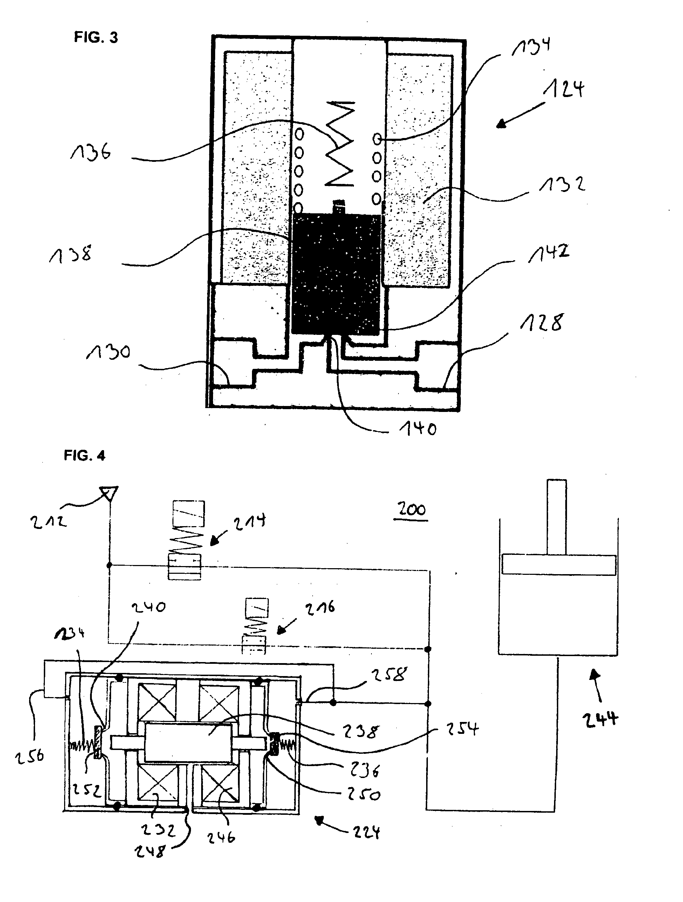

Figur 3 zeigt ein Magnetventil 124 der erfindungsgemäßen Vorrichtung 100 gemäß einem zweiten Ausführungsbeispiel der Erfindung. Zur Vermeidung von Wiederholungen wird bei der Beschreibung des zweiten Ausführungsbeispiels lediglich auf die Unterschiede zum ersten Ausführungsbeispiel eingegangen. Gleiche oder ähnliche Komponenten sind dabei mit gleichen oder ähnlichen Bezugszeichen bezeichnet. Das Magnetventil 124 der zweiten Ventileinrichtung umfasst einen ersten Kanal 130, der über den Aktuatoranschluss 18 mit dem Aktuator gekoppelt ist. Der erste Kanal 130 ist mit einem zweiten Kanal 128 koppelbar, der über den Luftablass 20 mit der Umgebung des Fahrzeugs gekoppelt ist. Weiterhin umfasst das Magnetventil 124 einen Ventilkolben 138, über den die Kopplung zwischen dem ersten Kanal 130 und dem zweiten Kanal 128 hergestellt und unterbrochen werden kann. Insbesondere wird die Verbindung zwischen dem ersten Kanal 130 und dem zweiten Kanal 128 dann unterbrochen, wenn der Ventilkolben 138 mit einem Dichtabschnitt 142 an einem Ventilsitz 140 anliegt, der zwischen beiden Kanälen 128, 130 ausgebildet ist. Der Ventilkolben 138 wird weiterhin über eine erste Feder 134 gegen den Ventilsitz 140 vorgespannt. Dabei stützt sich die erste Feder 134 an einem nicht näher interessierenden Gehäuseteil des Magnetventils 124. Darüber hinaus wird der Ventilkolben 138 von einer Magnetspule 132 umgeben. Ferner umfasst das Magnetventil 124 eine zweite Feder 136, die mit dem an dem Ventilsitz 140 anliegenden Ventilkolben 138 nicht in Berührung steht, aber bei einer Axialverschiebung des Ventilkolbens 138 weg von dem Ventilsitz 140 innerhalb der Magnetspule 132 mit diesem in Berührung bringbar ist. Dementsprechend ist der Ventilkolben 138 innerhalb der Magnetspule 132 gegen die Federkraft der ersten Feder 134 bewegbar und gelangt ab einer vorbestimmten axialen Verschiebung mit der zweiten Feder 136 in Berührung. Bei Berührung des Ventilkolbens 138 mit der zweiten Feder 136 ist der Ventilkolben 138 weiterhin weg von dem Ventilsitz 140 bewegbar, allerdings gegen die Federkräfte der ersten Feder 134 und der zweiten Feder 136, bis der Ventilkolben 138 mit einem Gehäuseteil des Magnetventils 124 in Berührung tritt.

Zur Durchführung des erfindungsgemäßen Verfahrens wird die Magnetspule 132 mit einem ersten Strom derart bestromt, dass sich der Kolben entgegen der Federkraft der ersten Feder 134 von dem Ventilsitz 140 wegbewegt Jedoch ist das Ausmaß der Bestromung derart festgelegt, dass die durch die Magnetspule 132 hervorgerufene magnetische Kraft auf den Ventilkolben 138 nicht zur Überwindung der Federkräfte der ersten Feder 134 und der zweiten Feder 136 zusammen ausreicht. Dementsprechend verharrt der Ventilkolben 138 an einer Position, bei der er mit der zweiten Feder 136 in Berührung tritt. Somit befindet sich das Magnetventil 124 in einer Durchlassstellung, bei der ein Strömungsquerschnitt zur Verfügung gestellt wird, der mit einem dem zweiten Volumenstrom entsprechenden Volumenstrom durchströmbar ist. Wird ein den ersten Strom übersteigender zweiter Strom an der Magnetspule 132 angelegt, so erhöht sich die auf den Ventilkolben 138 aufgebrachte magnetische Kraft. Dadurch bewegt sich der Kolben weiter weg von dem Ventilsitz 140 gegen die Federkräfte der ersten Feder 134 und der zweiten Feder 136, bis er an einem Gehäuseteil des Magnetventils 124 anschlägt. Somit wird ein Strömungsquerschnitt zur Verfügung gestellt, der mit einem dem ersten Volumenstrom entsprechenden Volumenstrom durchströmbar ist. Auf diese Weise werden durch unterschiedliche Bestromung der Magnetspule 132 zwei Strömungsquerschnitte beziehungsweise zwei Magnetventilsteilungen bereitgestellt, über die jeweils der erste und zweite Volumenstrom einstellbar ist. Somit kann der Aktuator durch geeignete Steuerung/Regelung der Bestromung der Magnetspule 132 sowohl schnell als auch langsam entlüftet werden, wobei lediglich ein Magnetventil 124 zur Entlüftung des Aktuators vorgesehen ist.

Figur 4 zeigt eine Darstellung einer nicht beanspruchten Vorrichtung 200 zum Stellen eines Aktuators 244 gemäß einem dritten Ausführungsbeispiel. Zur Vermeidung von Wiederholungen wird bei der Beschreibung des dritten Ausführungsbeispiels lediglich auf die Unterschiede zum ersten Ausführungsbeispiel eingegangen, wobei gleiche oder ähnliche Komponenten des dritten Ausführungsbeispiels mit ähnlichen Bezugszeichen versehen sind. In diesem Fall ist die erfindungsgemäße Vorrichtung in stark schematisierter Weise dargestellt, wobei der Aktuator 244 exem-plarisch als Kolben-Zylinderanordnung gezeigt ist. Das Magnetventil 224 der zweiten Ventileinrichtung ist in gemäß dem dritten Ausführungsbeispiel in abgewandelter Form ausgeführt und umfasst im dargestellten Fall zwei Ventilsitze, einen ersten Ventilsitz 240 und einen zweiten Ventilsitz 250, die jeweils mit einem ersten Verschlusselement 252 und einem zweiten Verschlusselement 254 verschließbar sind.

Das erste Verschlusselement wird über eine erste Feder 234 gegen den Ventilsitz 240 vorgespannt. Das zweite Verschlusselement wird über eine zweite Feder 236 gegen den Ventilsitz 250 vorgespannt. Weiterhin umfasst das Magnetventil 224 einen zwischen den Ventilsitzen 240 und 250 angeordneten Ventilkolben 238, der beweglich innerhalb von zwei Magnetspulen 232 und 246 gelagert ist. Somit lässt sich der Ventilkolben 238 jeweils in Richtung des ersten Verschlusselements 252 und in Richtung des zweiten Verschlusselements 254 bewegen. Das Magnetventil 224 umfasst zwei Anschlüsse, über die das Magnetventil 224 mit dem Aktuator 244 gekoppelt ist. Ein erster Anschluss 256 führt in eine Ventilkammer, die durch das erste Verschlusselement 252 geschlossen ist. Ein zweiter Anschluss 258 führt in eine weitere Ventilkammer, die durch das zweite Verschlusselement 254 geschlossen ist. Zwischen beiden Ventilkammern, das heißt in dem Raum, in dem der Ventilkolben 238 gelagert ist, ist ein Ablasskanal 248 vorgesehen, der mit der Umgebung des Fahrzeugs gekoppelt ist.

Zur Durchführung des Verfahrens zum Stellen des Aktuators werden die Magnetspulen 232 und 246 entsprechend bestromt, so dass sich der Ventilkolben 238 entweder in Richtung des ersten Verschlusselements 252 oder in Richtung des zweiten Verschlusselements 254 bewegt. Tritt der Ventiikolben 238 mit einem der Verschlusselemente 252, 254 in Berührung, so wird dieses Verschlusselement gegen die entsprechende Federkraft der Feder 234, 236 bewegt und entfernt sich von dem jeweiligen Ventilsitz 240, 250. Dadurch wird eine Verbindung zwischen der entsprechenden Ventilkammer und dem Ablasskanal 248 hergestellt. Da die Verschlusselemente 252 und 254 in ihren Abmaßen unterschiedlich ausgelegt sind, kann die Luft mit unterschiedlichen Volumenströmen abgelassen werden. In diesem Fall führt ein Wegbewegen des ersten Verschlusselements 252 von dem ersten Ventilsitz 240 zu einem Ablassen von Luft mit einem Volumenstrom gemäß dem ersten Volumenstrom. Hingegen führt ein Wegbewegen des zweiten Verschlusselements 236 von dem zweiten Ventilsitz 250 zu einem Luftablass mit einem Volumenstrom gemäß dem zweiten Volumenstrom. Somit kann anhand nur eines Magnetventils 224 Luft mit sowohl dem ersten als auch dem zweiten Volumenstrom abgelassen werden.

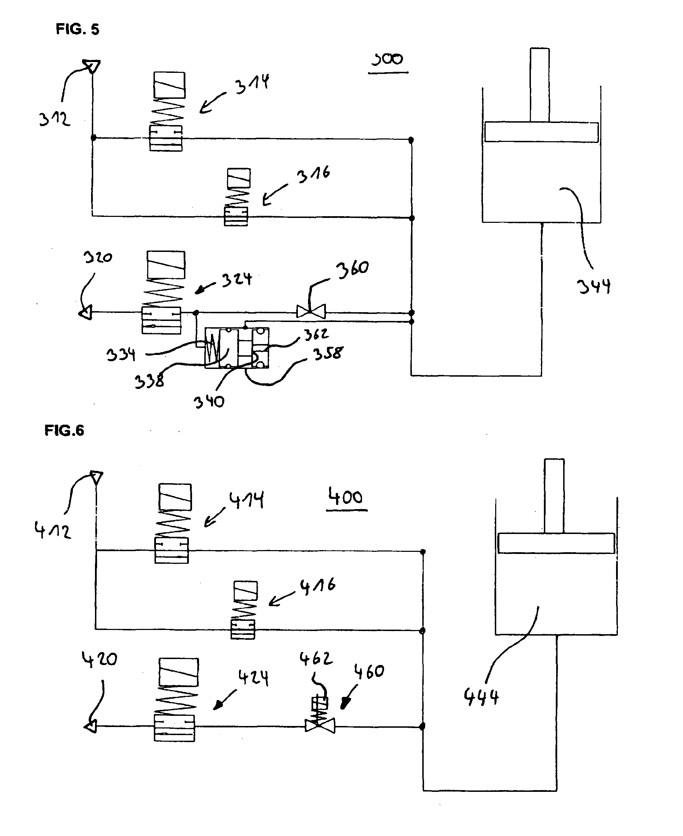

Figur 5 zeigt eine Darstellung der erfindungsgemäßen Vorrichtung 300 zum Stellen eines Aktuators 344 gemäß einem vierten Ausführungsbeispiel der Erfindung. Zur Vermeidung von Wiederholungen wird bei der Beschreibung des vierten Ausführungsbeispiels der Erfindung lediglich auf die Unterschiede zu dem dritten Ausführungsbeispiel eingegangen, wobei gleiche oder ähnliche Komponenten im Hinblick auf die vorangehenden Ausführungsbeispiele mit ähnlichen Bezugszeichen bezeichnet sind. In diesem Fall ist das Magnetventil 324 der zweiten Ventilvorrichtung mit dem Aktuator 344 über eine Drosselung 360 sowie über ein zur Drosselung 360 parallel geschaltetes druckbetätigbares Ablassventil 358 gekoppelt. Die Drosselung 360 und das Magnetventil 324 sind in diesem Ausführungsbeispiel mit dem zweiten Volumenstrom durchströmbar, wobei das Magnetventil 324 alternativ auch derart ausgelegt sein kann, dass es mit einem geringfügig größeren Volumenstrom als der zweite Volumenstrom durchströmbar ist. Das druckbetätigbare Ablassventil 358 umfasst einen Ventilkolben 338, der über eine Feder 334 gegen einen Ventilsitz 340 vorgespannt wird, um einen Ablasskanal 362, der in dem Ablassventil 358 ausgebildet ist, zu schließen. Dieser Ablasskanal 362 ist mit der Umgebung des Fahrzeugs gekoppelt.

Zur Durchführung des erfindungsgemäßen Verfahrens wird das Magnetventil 324 zur Entlüftung des Aktuators 344 in dessen Durchlassstellung geschaltet, während die Magnetventile 314, 316 der ersten Ventileinrichtung in Sperrstellung geschaltet sind. Somit strömt die Luft mit einem dem zweiten Volumenstrom entsprechenden Volumenstrom durch die Drosselung 360 sowie durch das Magnetventil 324 über den Luftablass 320 in die Umgebung des Fahrzeugs. Bei länger anhaltender Entlüftung des Aktuators 344 erhöht sich der Druck zwischen dem Aktuator 344 und der Drosselung 360, so dass sich weiterhin der Druck in dem Ablassventil 358 in einer mit Ventilkammer erhöht, die direkt mit dem Aktuator 344 gekoppelt ist. Diese Druckerhöhung führt dazu, dass sich der Ventilkolben 338 von dem Ventilsitz 340 gegen die Federkraft der Feder 334 wegbewegt, wodurch der Ablasskanal 362 geöffnet wird und eine Verbindung zwischen dem Aktuator 344, der Ventilkammer und der Umgebung des Fahrzeugs über den Ablasskanal 362 des druckbetätigbaren Ablassventils 358 hergestellt wird. Somit kann ein größeres Volumen, insbesondere ein Volumen mit einem Volumenstrom gemäß dem ersten Volumenstrom, in die Umgebung des Fahrzeugs strömen.

Figur 6 zeigt eine Darstellung der erfindungsgemäßen Vorrichtung 400 zum Stellen eines Aktuators 444 gemäß einem fünften Ausführungsbeispiel der Erfindung. Zur Vermeidung von Wiederholungen wird bei der Beschreibung dieses Ausführungsbeispiels lediglich auf die Unterschiede zum vorangehenden vierten Ausführungsbeispiel eingegangen. Gleiche oder ähnliche Komponenten sind dabei mit ähnlichen Bezugszeichen im Hinblick auf die vorangehenden Ausführungsbeispiele bezeichnet. Im dargestellten Fall ist das Magnetventil 424 der zweiten Ventileinrichtung ein 2/2-Wegeventil, das einen Strömungsquerschnitt umfasst, der in diesem Fall mit einem dem ersten Volumenstrom entsprechenden Volumenstrom durchströmbar ist. Weiterhin ist das Magnetventil 424 mit dem Aktuator 444 ausschließlich über eine aktuatorisch ansteuerbare und damit stellbare Drosselung 460 gekoppelt. Diese Drosselung 460 umfasst einen Aktuator 462, über den der Strömungsquerschnitt der Drosselung 460 einstellbar ist. Vorzugsweise lässt sich dadurch der Strömungsquerschnitt der Drosselung 460 bis zu dem Strömungsquerschnitt einstellen, der mit einem dem ersten Volumenstrom entsprechenden Volumenstrom durchströmbar ist. Dadurch kann anhand der aktuatorisch stellbaren Drosselung 460 das Ausmaß der Entlüftung des Aktuators 444 eingestellt werden, während das Magnetventil 424 der zweiten Ventileinrichtung sich in dessen Durchlassstellung befindet.

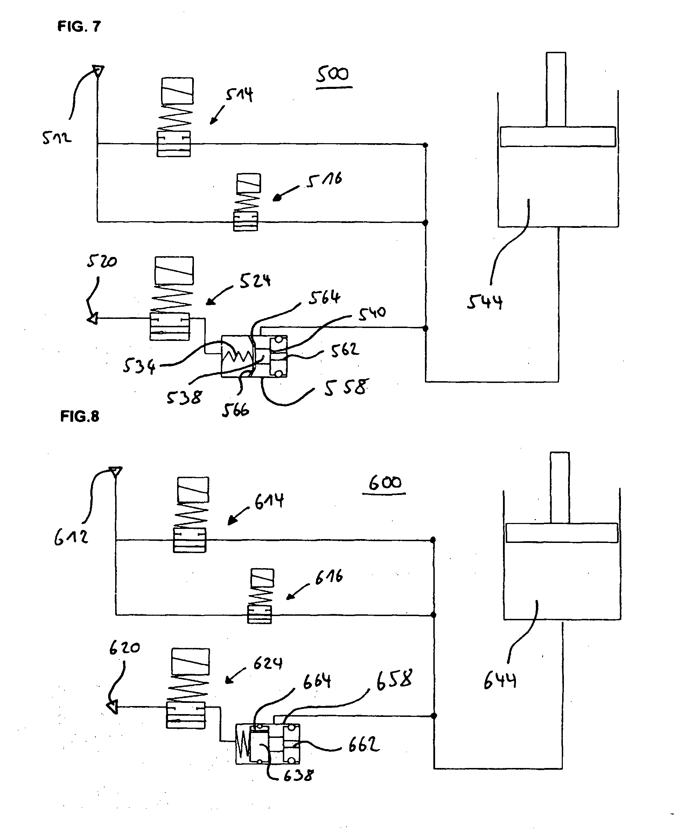

Figur 7 zeigt eine Darstellung der erfindungsgemäßen Vorrichtung 500 zum Stellen eines Aktuators 544 gemäß einem sechsten Ausführungsbeispiel der Erfindung. Zur Vermeidung von Wiederholungen wird lediglich auf die Unterschiede zum vorangehenden fünften Ausführungsbeispiel eingegangen, wobei gleiche oder ähnliche Komponenten mit ähnlichen Bezugszeichen im Hinblick auf die vorangehenden Ausführungsbeispiele bezeichnet sind. In diesem Fall ist anstelle der aktuatorisch stellbaren Drosselung 460 ein druckbetätigbares Ablassventil 558 zwischen dem Magnetventil 524 und dem Aktuator 544 zwischengeschaltet, so dass das Magnetventil 524 ausschließlich über das druckbetätigbare Ablassventil 558 mit dem Aktuator 544 gekoppelt ist. Das Ablassventil 558 umfasst im dargestellten Fall einen Ventilkolben 538, der über eine Feder 534 gegen einen Ventilsitz 540 vorgespannt wird, um einen Ablasskanal 562 zu schließen. Weiterhin ist der Ventilkolben 538 mit einer Membran 566 gekoppelt, so dass durch die Membran 566 zwei Druckräume innerhalb des Ablassventils 558 ausgebildet werden. Beide Druckräume sind über eine Bohrung 564 in der Membran 566 permanent miteinander verbunden. Somit wird eine permanente Verbindung zwischen dem Aktuator 544 und dem Magnetventil 524 über die Druckräume des Ablassventils 558 durch die Bohrung 564 geschaffen. Dabei weist die Bohrung einen Strömungsquerschnitt auf, der mit einem dem zweiten Volumenstrom entsprechenden Volumenstrom durchströmbar ist. Ebenso weist das Magnetventil 524 der zweiten Ventileinrichtung einen Strömungsquerschnitt auf, der mit einem dem zweiten Volumenstrom entsprechenden Volumenstrom durchströmbar ist. Alternativ kann der Strömungsquerschnitt auch größer ausgelegt werden, so dass ein größerer Volumenstrom durch das Magnetventil 424 strömen kann.

Zur Durchführung des erfindungsgemäßen Verfahrens wird das Magnetventil 524 in dessen Durchlassstellung geschaltet. Dadurch kann Luft von dem Aktuator 544 durch die Bohrung 564 in der Membran 566 des Ablassventils 558 und durch das Magnetventil 524 über den Druckablass 520 in die Umgebung des Fahrzeugs strömen. Bei länger anhaltender Entlüftung des Aktuators 544 baut sich ein Druck vor dem Ablassventil 558 auf, der bei Überschreiten eines bestimmten Werts den Ventilkolben 538 des Ablassventils 558 gegen die Federkraft der Feder 534 weg von dem Ventilsitz 540 bewegt. Dadurch wird der Ablasskanal 562 geöffnet, so dass die Luft von dem Aktuator 544 vorwiegend über den Ablasskanal 562 in die Umgebung des Fahrzeugs strömt, vorzugsweise mit einem dem ersten Volumenstrom entsprechenden Volumenstrom.

Figur 8 zeigt eine Darstellung der erfindungsgemäßen Vorrichtung 600 zum Stellen eines Aktuators 644 gemäß einem siebten Ausführungsbeispiel der Erfindung. Zur Vermeidung von Wiederholungen wird lediglich auf die Unterschiede zum vorangehenden sechsten Ausführungsbeispiel eingegangen. Dabei sind gleiche oder ähnliche Komponenten mit ähnlichen Bezugszeichen im Hinblick auf das vorangehende sechste Ausführungsbeispiel bezeichnet. Dieses Ausführungsbeispiel unterscheidet sich von dem sechsten Ausführungsbeispiel darin, dass der Ventilkolben 638 des druckbetätigbaren Ablassventils 658 mit einem Absatz versehen ist durch den die zwei Druckkammern teilweise ausgebildet werden, wobei in dem Absatz des Ventilkolbens 636 eine Bohrung 664 vorgesehen ist. Durch die Bohrung 664 in dem Absatz des Ventilkolbens 638 wird, wie bei dem vorangehenden Ausführungsbeispiel, eine permanente Verbindung zwischen dem Aktuator 644 und dem Magnetventil 624 der zweiten Ventileinrichtung geschaffen. Ansonsten entspricht das siebte Ausführungsbeispiel dem vorangehenden sechsten Ausführungsbeispiel.

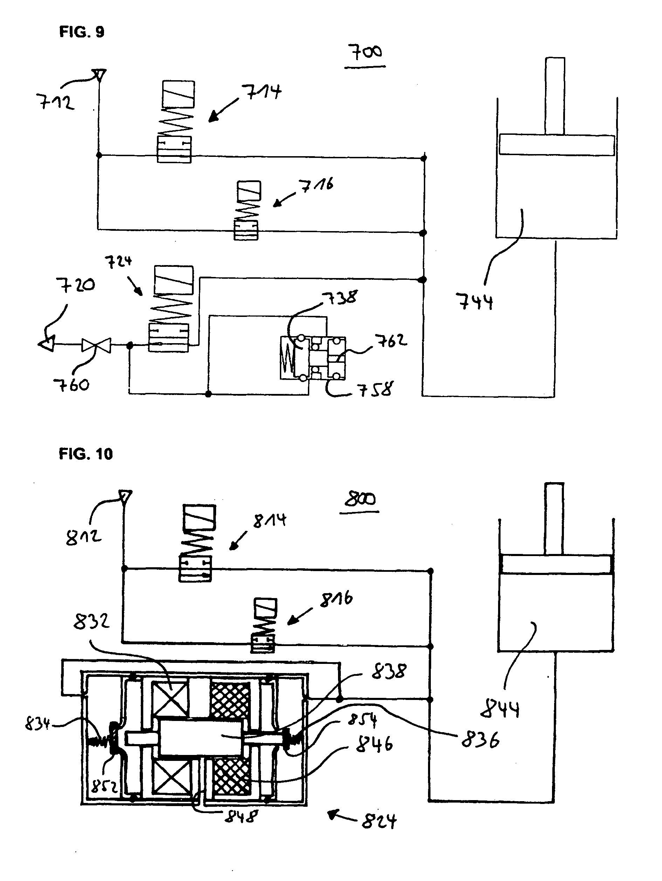

Figur 9 zeigt eine Darstellung der erfindungsgemäßen Vorrichtung 700 zum Stellen eines Aktuators 744 gemäß einem achten Ausführungsbeispiel der Erfindung. Zur Vermeidung von Wiederholungen wird bei der Beschreibung dieses Ausführungsbeispiels lediglich auf die Unterschiede zum vierten Ausführungsbeispiel eingegangen. Gleiche oder ähnliche Komponenten werden mit ähnlichen Bezugszeichen im Hinblick auf die vorangehenden Ausführungsbeispiele bezeichnet. Dieses Ausführungsbeispiel unterscheidet sich zum vierten Ausführungsbeispiel dahingehend, dass die Drosselung 760 dem Magnetventil 724 der zweiten Ventileinrichtung nachgeschaltet ist und dass das druckbetätigbare Ablassventil 758 zwischen der Drosselung 760 und dem Magnetventil 724 zwischengeschaltet ist. Weiterhin ist das Magnetventil 724 derart ausgelegt, dass es mit einem dem ersten Volumenstrom entsprechenden Volumenstrom durchströmbar ist, während die Drosselung 760 mit dem zweiten Volumenstrom durchströmbar ist.

Zur Durchführung des erfindungsgemäßen Verfahrens wird das Magnetventil 724 in dessen Durchlassstellung geschaltet. In diesem Fall weist das Magnetventil 724 einen Strömungsquerschnitt auf, der mit einem dem ersten Volumenstrom entsprechenden Volumenstrom durchströmbar ist. Hingegen ist die Drosselung 760 lediglich mit einem dem zweiten Volumenstrom entsprechenden Volumenstrom durchströmbar. Wird das Magnetventil 724 längere Zeit in dessen Durchlassstellung gehalten, so baut sich vor der Drosselung 760 ein Druck auf, der dazu führt, dass bei Überschreiten eines vorbestimmten Werts das druckbetätigbare Ablassventil 758 öffnet. Somit kann die Luft von dem Aktuator 744 über das Magnetventil 724 durch das druckbetätigbare Ablassventil 758 über den Ablasskanal 762 in die Umgebung des Fahrzeugs strömen. Der Strömungsquerschnitt des Ablasskanals 762 des Ablassventils 758 ist vorzugsweise so ausgelegt, dass die Luft mit einem dem ersten Volumenstrom entsprechenden Volumenstrom in die Umgebung des Fahrzeugs strömen kann.

Figur 10 zeigt eine Darstellung einer nicht beanspruchten Vorrichtung 800 zum Stellen eines Aktuators 844 gemäß einem neunten Ausführungsbeispiel. Zur Vermeidung von Wiederholungen wird bei der Beschreibung dieses Ausführungsbeispiels lediglich auf die Unterschiede zum dritten Ausführungsbeispiel eingegangen, wobei gleiche oder ähnliche Komponenten mit ähnlichen Bezugszeichen im Hinblick auf die vorangehenden Ausführungsbeispiele bezeichnet sind. Dieses Ausführungsbeispiel unterscheidet sich von dem dritten Ausführungsbeispiel darin, dass in dem Magnetventil 824 anstelle von zwei Magnetspulen lediglich eine Magnetspule 832 vorgesehen ist, wobei die andere Magnetspule durch einen Permanentmagneten 846 ersetzt ist. Somit kann durch Bestromung der einen Magnetspule 832 eine magnetische Kraft auf den Ventilkolben 838 entweder gegen die magnetische Kraft des Permanentmagneten 846 oder in Richtung der magnetischen Kraft des Permanentmagneten 846 aufgebracht werden, um das entsprechende Verschlusselement 852, 854 von dem entsprechenden Ventilsitz wegzubewegen. Ansonsten entspricht dieses Ausführungsbeispiel dem dritten Ausführungsbeispiel.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10': Vorrichtung zum Stellen des Aktuators
- 12': Druckluftversorgungsanschluss
- 14': erstes Magnetventil der ersten Ventileinrichtung
- 16': zweites Magnetventil der ersten Ventileinrichtung
- 18': Aktuatoranschluss
- 20': Luftablass
- 22': erstes Magnetventil der zweiten Ventileinrichtung
- 24': zweites Magnetventil der zweiten Ventileinrichtung
- 26': Rückschlagventil
- 10: Vorrichtung zum Stellen des Aktuators
- 12: Druckluftversorgungsanschluss
- 14: erstes Magnetventil der ersten Ventileinrichtung
- 16: zweites Magnetventil der ersten Ventileinrichtung
- 18: Aktuatoranschluss
- 20: Luftablass
- 24: Magnetventil der zweiten Ventileinrichtung
- 26: Rückschlagventil
- 124: Magnetventil
- 128: zweiter Kanal
- 130: erster Kanal
- 132: Magnetspule
- 134: erste Feder
- 136: zweite Feder
- 138: Ventilkolben
- 140: Ventilsitz
- 142: Dichtabschnitt
- 200: Vorrichtung
- 224: Magnetventil
- 232: Magnetspule
- 234: erste Feder
- 236: zweite Feder
- 238: Ventilkolben
- 240: erster Ventilsitz
- 244: Aktuator
- 246: Magnetspule
- 248: Ablasskanal
- 250: zweiter Ventilsitz
- 252: erstes Verschlusselement
- 254: zweites Verschlusselement
- 256: erster Anschluss
- 258: zweiter Anschluss
- 300: Vorrichtung
- 314: erstes Magnetventil
- 316: zweites Magnetventil
- 320: Luftablass
- 324: Magnetventil
- 334: Feder
- 338: Ventilkolben
- 340: Ventilsitz
- 344: Aktuator
- 358: Ablassventil
- 360: Drosselung
- 362: Ablasskanal
- 400: Vorrichtung
- 414: erstes Magnetventil
- 416: zweites Magnetventil
- 424: Magnetventil
- 444: Aktuator
- 460: aktuatorisch stellbare Drosselung
- 462: Aktuator
- 500: Vorrichtung
- 514: erstes Magnetventil
- 516: zweites Magnetventil
- 520: Druckablass
- 524: Magnetventil
- 534: Feder
- 538: Ventilkolben
- 540: Ventilsitz
- 544: Aktuator
- 558: Ablassventil
- 562: Ablasskanal
- 564: Bohrung
- 566: Membran
- 600: Vorrichtung
- 614: erstes Magnetventil
- 616: zweites Magnetventil
- 624: Magnetventil
- 638: Ventilkolben
- 644: Aktuator
- 658: Ablassventil
- 664: Bohrung
- 700: Vorrichtung
- 714: erstes Magnetventil
- 716: zweites Magnetventil
- 724: Magnetventil
- 744: Aktuator
- 758: Ablassventil
- 760: Drosselung
- 762: Ablasskanal
- 800: Vorrichtung
- 814: erstes Magnetventil
- 816: zweites Magnetventil
- 832: Magnetspule
- 834: erste Feder
- 836: zweite Feder
- 838: Ventilkolben
- 844: Aktuator
- 846: Permanentmagnet
- 848: Ablasskanal
- 852: erstes Verschlusselement
- 854: zweites Verschlusselement

## Patentansprüche

1. Vorrichtung (10; 300; 400; 500; 600; 700) zum Stellen eines Aktuators (344; 444; 544; 644; 744), insbesondere eines Kupplungsaktuators eines Fahrzeugs, mit einer ersten Ventileinrichtung (14, 16; 314, 316; 414, 416; 514, 516; 614, 616; 714, 714), über die der Aktuator mit Druck beaufschlagbar ist, und mit einer zweiten Ventileinrichtung (24; 124; 324; 424: 524; 624; 724), über die der Druck am Aktuator abbaubar ist, wobei die erste Ventileinrichtung ein erstes und zweites Magnetventil umfasst, die parallel geschaltet sind, wobei das erste Magnetventil (14; 314; 414; 514; 614; 714) einen ersten Strömungsquerschnitt zum Durchströmen mit einem ersten Volumenstrom und das zweite Magnetventil (16; 316; 416; 516; 616; 716) einen zweiten Strömungsquerschnitt zum Durchströmen mit einem zweiten Volumenstrom aufweist, wobei der zweite Strömungsquerschnitt kleiner ist als der erste Strömungsquerschnitt, so dass der zweite Volumenstrom kleiner als der erste Volumenstrom ist, wobei das erste Magnetventil und das zweite Magnetventil zur Druckbeaufschlagung des Aktuators durchströmbar sind, **dadurch gekennzeichnet, dass** die zweite Ventileinrichtung lediglich ein Magnetventil umfasst, über das der Druck am Aktuator abbaubar ist, so dass keine Redundanz zum Druckabbau am Aktuator besteht.

2. Vorrichtung (10; 400) nach Anspruch 1, **dadurch gekennzeichnet, dass** das Magnetventil der zweiten Ventileinrichtung (24; 124; 424) einen dem ersten Strömungsquerschnitt entsprechenden Strömungsquerschnitt aufweist und mit einem dem ersten Volumenstrom entsprechenden Volumenstrom durchströmbar ist, um einen Druckabbau am Aktuator (444) zu bewirken.

3. Vorrichtung (10) nach Anspruch 1 oder 2, **dadurch gekennzeichnet, dass** das mit dem zweiten Volumenstrom durchströmbare zweite Magnetventil (16) der ersten Ventileinrichtung und das mit dem ersten Volumenstrom durchströmbare Magnetventil der zweiten Ventileinrichtung (24) in eine Durchlassstellung schaltbar sind, um den Druck am Aktuator im Wesentlichen mit einem Volumenstrom entsprechend dem zweiten Volumenstrom abzubauen.

4. Vorrichtung nach Anspruch 1, **dadurch gekennzeichnet, dass** das Magnetventil der zweiten Ventileinrichtung ein Proportionalventil ist, über das ein Volumenstrom zum Druckabbau am Aktuator proportional zu einem Ansteuersignal des Proportionalventils einstellbar ist.

5. Vorrichtung nach Anspruch 1, **dadurch gekennzeichnet, dass** das Magnetventil der zweiten Ventileinrichtung (124) derart ausgebildet ist, dass es zumindest zwei Durchlassstellungen einnehmen kann, über die der erste und zweite Volumenstrom zum Druckabbau am Aktuator jeweils einstellbar sind.

6. Vorrichtung nach Anspruch 5, **dadurch gekennzeichnet, dass** den zwei Durchlassstellungen des Magnetventils der zweiten Ventileinrichtung (124) unterschiedlich hohe magnetische Kräfte zugeordnet sind, um das Magnetventil (124) in die entsprechende Durchlassstellung zu bringen.

7. Vorrichtung (300; 500; 600) nach Anspruch 1, **dadurch gekennzeichnet, dass** das Magnetventil der zweiten Ventileinrichtung (324; 524; 624) einen dem zweiten Strömungsquerschnitt entsprechenden Strömungsquerschnitt aufweist und mit einem dem zweiten Volumenstrom entsprechenden Volumenstrom durchströmbar ist, um einen Druckabbau am Aktuator (344; 544; 644) zu bewirken.

8. Vorrichtung (300) nach Anspruch 7, **dadurch gekennzeichnet, dass** dem Magnetventil der zweiten Ventileinrichtung (324) ein druckbetätigbares Ablassventil (358) vorgeschaltet ist, das in einer geöffneten Stellung zum Druckabbau am Aktuator (344) über einen Ablass (362) dient und das zu einer mit dem zweiten Volumenstrom durchströmbaren Drosselung (360) parallel geschaltet und derart ausgebildet ist, dass das druckbetätigbare Ablassventil (358) öffnet, wenn das Magnetventil der zweiten Ventileinrichtung (324) in Durchlassstellung zum Druckabbau am Aktuator (344) geschaltet ist und ein Druck vor der Drosselung (360) einen vorbestimmten Wert überschreitet.

9. Vorrichtung (300) nach Anspruch 8, **dadurch gekennzeichnet, dass** das druckbetätigbar Ablassventil (358) derart ausgebildet ist, dass es in einer Sperrstellung des Magnetventils der zweiten Ventileinrichtung (324) schliesst.

10. Vorrichtung (500; 600) nach Anspruch 7, dadurch gekenntzeichnet, dass das Magnetventil der zweiten Ventileinrichtung (524; 624) ausschließlich über ein druckbetätigbares Ablassventil (558; 658) mit dem Aktuator (544; 644) gekoppelt ist.

11. Vorrichtung (500; 600) nach Anspruch 10 , **dadurch gekennzeichnet, dass** das druckbetätigbare Ablassventil (558; 658) derart ausgebildet ist, dass es eine mit dem zweiten Volumenstrom durchströmbare permanente Verbindung zwischen dem Magnetventil der zweiten Ventileinrichtung (524; 624) und dem Aktuator (544; 644) umfasst und zum Druckabbau über einen Ablass (562; 662) öffnet, wenn der Druck vor dem druckbetätigbaren Ablassventil (558; 658) einen vorbestimmten Wert überschreitet.

12. Vorrichtung (600) nach Anspruch 11, **dadurch gekennzeichnet, dass** die permanente Verbindung durch eine Bohrung (664) in einem Ventilkolben (638) des Ablassventils (658) ausgebildet wird.

13. Vorrichtung (500) nach Anspruch 11, **dadurch gekennzeichnet, dass** die permanente Verbindung durch eine Bohrung (564) in einer Membran (566) des Ablassventils (558) ausgebildet wird.

14. Vorrichtung (700) nach Anspruch 2, **dadurch gekennzeichnet, dass** dem Magnetventil der zweiten Ventileinrichtung (724) eine mit dem zweiten Volumenstrom durchströmbare Drosselung (760) und ein der Drosselung (760) vorgeschaltetes druckbetätigbares Ablassventil (758) nachgeschaltet sind, wobei das druckbetätigbare Ablassventil (758) derart ausgebildet ist, dass es zum Druckabbau über einen Ablass (762) öffnet, wenn ein Druck zwischen der Drosselung (760) und dem Magnetventil der zweiten Ventileinrichtung (724) einen vorbestimmten Wert überschreitet.

15. Vorrichtung (400) nach Anspruch 2, **dadurch gekennzeichnet, dass** dem Magnetventil der zweiten Ventileinrichtung (424) eine aktuatorisch ansteuerbare Drosselung (460, 462) vorgeschaltet ist, über die ein Volumenstrom zum Magnetventil der zweiten Ventileinrichtung (424) bis maximal auf den ersten Volumenstrom einstellbar ist.

16. Vorrichtung nach Anspruch 5, **dadurch gekennzeichnet, dass** das Magnetventil der zweiten Ventileinrichtung ein 3/3-Wegeventil ist, das in einer mittleren Stellung eine Sperrstellung aufweist.

17. Vorrichtung nach einem der Ansprüche 1 bis 16, **dadurch gekennzeichnet, dass** der Aktuator derart ausgebildet ist, dass er bei Druckbeaufschlagung eine Kraft- oder Drehmomentübertragung in einem Antriebsstrang des Fahrzeugs durch eine Kupplung unterbricht und bei Druckabbau die Kraft- oder Drehmomentübertragung in dem Antriebsstrang über die Kupplung herstellt.

18. Verfahren zum Stellen eines Aktuators (344; 444; 544; 644; 744), insbesondere eines Kupplungsaktuators eines Fahrzeugs, wobei der Aktuator über eine erste Ventileinrichtung (14, 16; 314, 316; 414, 416; 514, 516; 614, 616; 714, 714) mit Druck beaufschlagt wird und über eine zweite Ventileinrichtung (24; 124; 324; 424; 524; 624; 724) der Druck am Aktuator abgebaut wird, wobei ein erstes Magnetventil (14; 314; 414; 514; 614; 714) der ersten Ventileinrichtung einen ersten Strömungsquerschnitt zum Durchströmen mit einem ersten Volumenstrom und ein zweites Magnetventil (16; 316; 416; 516; 616; 716) der ersten Ventileinrichtung einen zweiten Strömungsquerschnitt zum Durchströmen mit einem zweiten Volumenstrom aufweist, wobei der zweite Strömungsquerschnitt kleiner ist als der erste Strömungsquerschnitt, so dass der zweite Volumenstrom kleiner als der erste Volumenstrom ist, wobei das erste Magnetventil und das zweite Magnetventil parallel geschaltet sind und zur Druckbeaufschlagung des Aktuators durchströmt werden können, **dadurch gekennzeichnet, dass** die zweite Ventileinrichtung lediglich ein Magnetventil umfasst, über das der Druck am Aktuator abgebaut wird, so dass keine Redundanz zum Druckabbau am Aktuator besteht.

19. Verfahren nach Anspruch 18, **dadurch gekennzeichnet, dass** das Magnetventil der zweiten Ventileinrichtung (24; 124; 424) einen dem ersten Strömungsquerschnitt entsprechenden Strömungsquerschnitt aufweist und mit einem dem ersten Volumenstrom entsprechenden Volumenstrom durchströmt wird, um einen Druckabbau am Aktuator (444) zu bewirken.

20. Verfahren nach Anspruch 18 oder 19, **dadurch gekennzeichnet, dass** das mit dem zweiten Volumenstrom durchströmbare zweite Magnetventil (16) der ersten Ventileinrichtung und das mit dem ersten Volumenstrom durchströmbare Magnetventil der zweiten Ventileinrichtung (24) in eine Durchlassstellung geschaltet werden, um den Druck am Aktuator im Wesentlichen mit einem Volumenstrom entsprechend dem zweiten Volumenstrom abzubauen.

21. Verfahren nach Anspruch 18, **dadurch gekennzeichnet, dass** das Magnetventil der zweiten Ventileinrichtung ein Proportionalventil ist, über das ein Volumenstrom zum Druckabbau am Aktuator proportional zu einem Ansteuersignal des Proportionalventils eingestellt wird.

22. Verfahren nach Anspruch 18, **dadurch gekennzeichnet, dass** das Magnetventil der zweiten Ventileinrichtung (124) zumindest zwei Durchlassstellungen einnehmen kann, über die der erste und zweite Volumenstrom zum Druckabbau am Aktuator jeweils eingestellt werden.

23. Verfahren nach Anspruch 22, **dadurch gekennzeichnet, dass**, um das Magnetventil der zweiten Ventileinrichtung (124) in eine von zwei unterschiedlichen Durchlassstellungen zu bringen, eine magnetische Kraft entsprechend der ausgewählten Durchlassstellung aufgebracht wird, die sich von einer magnetischen Kraft der anderen Durchlassstellung unterscheidet.

24. Verfahren nach Anspruch 18, **dadurch gekennzeichnet, dass** das Magnetventil der zweiten Ventileinrichtung (324; 524; 624) einen dem zweiten Strömungsquerschnitt entsprechenden Strömungsquerschnitt aufweist und mit einem dem zweiten Volumenstrom entsprechenden Volumenstrom durchströmt wird, um einen Druckabbau am Aktuator (344; 544; 644) zu bewirken.

25. Verfahren nach Anspruch 24, **dadurch gekennzeichnet, dass** dem Magnetventil der zweiten Ventileinrichtung (324) ein druckbetätigbares Ablassventil (358) vorgeschaltet ist, das in einer geöffneten Stellung zum Druckabbau am Aktuator (344) über einen Ablass (362) dient und das zu einer mit dem zweiten Volumenstrom durchströmbaren Drosselung (360) parallel geschaltet ist, so dass das druckbetätigbare Ablassventil (358) öffnet, wenn das Magnetventil der zweiten Ventileinrichtung (324) in Durchlassstellung zum Druckabbau am Aktuator (344) geschaltet ist und ein Druck vor der Drosselung (360) einen vorbestimmten Wert überschreitet.

26. Verfahren nach Anspruch 25, **dadurch gekennzeichnet, dass** das druckbetätigbare Ablassventil (358) in einer Sperrstellung des Magnetventils der zweiten Ventileinrichtung (324) schliesst.

27. Verfahren nach Anspruch 24, **dadurch gekennzeichnet, dass** der Druckabbau am Aktuator (544; 644) ausschliesslich über das Magnetventil der zweiten Ventileinrichtung (524; 524) und ein druckbetätigbares Ablassventil (558; 658), das zwischen dem Magnetventil der zweiten Ventileinrichtung (524; 624) und dem Aktuator (544; 644) zwischengeschaltet ist, erfolgt.

28. Verfahren nach Anspruch 27, **dadurch gekennzeichnet, dass** das druckbetätigbare Ablassventil (558; 658) eine mit dem zweiten Volumenstrom durchströmbare permanente Verbindung zwischen dem Magnetventil der zweiten Ventileinrichtung (524; 624) und dem Aktuator (544; 644) umfasst und zum Druckabbau über einen Ablass (562; 662) öffnet, wenn der Druck vor dem druckbetätigbaren Ablassventil (558; 658) einen vorbestimmten Wert überschreitet.

29. Verfahren nach Anspruch 28, **dadurch gekennzeichnet, dass** die permanente Verbindung, die durch eine Bohrung (664) in einem Ventilkolben (638) des Ablassventils (658) ausgebildet ist, von dem zweiten Volumenstrom bei in Durchlassstellung befindlichem Magnetventil der zweiten Ventileinrichtung (624) durchströmt wird.

30. Verfahren nach Anspruch 28, **dadurch gekennzeichnet, dass** die permanente Verbindung, die durch eine Bohrung (564) in einer Membran (566) des Ablassventils (558) ausgebildet ist, von dem zweiten Volumenstrom bei in Durchlassstellung befindlichem Magnetventil der zweiten Ventileinrichtung (524) durchströmt wird.

31. Verfahren nach Anspruch 19, **dadurch gekennzeichnet, dass** dem Magnetventil der zweiten Ventileinrichtung (724) eine mit dem zweiten Volumenstrom durchströmbare Drosselung (760) und ein der Drosselung (760) vorgeschaltetes druckbetätigbares Ablassventil (758) nachgeschaltet sind, wobei das druckbetätigbare Ablassventil (758) zum Druckabbau über einen Ablass (762) öffnet, wenn ein Druck zwischen der Drosselung (760) und dem Magnetventil der zweiten Ventileinrichtung (724) einen vorbestimmten Wert überschreitet.

32. Verfahren nach Anspruch 19, **dadurch gekennzeichnet, dass** über eine aktuatorisch ansteuerbare, dem Magnetventil der zweiten Ventileinrichtung (424) vorgeschaltete Drosselung (460, 462) ein Volumenstrom zum Magnetventil der zweiten Ventileinrichtung (424) bis maximal auf den ersten Volumenstrom eingestellt wird.

33. Verfahren nach Anspruch 22, **dadurch gekennzeichnet, dass** das Magnetventil der zweiten Ventileinrichtung ein 3/3-Wegeventil ist, das in eine Sperrstellung, die eine mittlere Stellung des 3/3-Wegeventils darstellt, geschaltet wird, wenn ein Druckabbau am Aktuator unterbunden werden soll.

34. Verfahren nach einem der Ansprüche 18 bis 33, **dadurch gekennzeichnet, dass** der Aktuator bei Druckbeaufschlagung eine Kraft- oder Drehmomentübertragung in einem Antriebsstrang des Fahrzeugs durch eine Kupplung unterbricht und bei Druckabbau die Kraft- oder Drehmomentübertragung in dem Antriebsstrang über die Kupplung herstellt.

## Claims

1. Device (10; 300; 400; 500; 600; 700) for adjusting an actuator (344; 444; 544; 644; 744), in particular a clutch actuator of a vehicle, comprising a first valve means (14, 16; 314, 316; 414, 416; 514, 516; 614, 616; 714, 714), via which pressure can be applied on said actuator, and comprising a second valve means (24; 124; 324; 414; 524; 624; 724) via which the pressure on said actuator can be relieved, wherein said first valve means includes a first and a second solenoid valve, which are connected in parallel, with said first solenoid valve (14; 314; 414; 514; 614; 714) presenting a first flow area for the passage of a first volume flow and said second solenoid valve (16; 316; 416; 516; 716) presenting a second flow area for the passage of a second volume flow, with said second flow area being smaller than said first flow area so that said second volume flow is smaller than said first volume flow, wherein said first solenoid valve and said second solenoid valve are suitable for flow passage therethrough for pressure application on said actuator, **characterised in that** said second valve means comprises merely one solenoid valve via which the pressure on said actuator can be relieved so that there is no redundancy for relief of the pressure on said actuator.

2. Device (10; 400) according to Claim 1, **characterised in that** said solenoid valve of said second valve means (24; 124; 414) presents a flow area corresponding to said first flow area and is suitable for passage of a volume flow therethrough which corresponds to said first volume flow for effecting pressure relief on said actuator (444).

3. Device (10) according to Claim 1 or 2, **characterised in that** said second solenoid valve (16) of said second valve means, which is suitable for the passage of said second volume flow, and the solenoid valve of said second valve means (24), which is suitable for the passage of said first volume flow, are adapted to be switched into an open position for relief of the pressure on said actuator substantially by a volume flow corresponding to said second volume flow.

4. Device according to Claim 1, **characterised in that** said solenoid valve of said second valve means is a proportional valve via which a volume flow for relief of the pressure on said actuator is adjustable proportionally to a control signal of said proportional valve.

5. Device according to Claim 1, **characterised in that** said solenoid valve of said second valve means (124) is so configured that it can take at least two open positions via which said first and said second volume flow for relief of the pressure on said actuator can each be adjusted.

6. Device according to Claim 5, **characterised in that** different magnetic forces are associated with said two open positions of said solenoid valve of said second valve means (124) for moving said solenoid valve (124) into the respective open position.

7. Device (300; 500; 600) according to Claim 1, **characterised in that** said solenoid valve of said second valve means (324; 524; 624) presents a flow area corresponding to said second flow area and is suitable for the passage of a volume flow that corresponds to said second volume flow for effecting relief of the pressure on said actuator (344; 544; 644).

8. Device (300) according to Claim 7, **characterised in that** a release valve operable by pressure (358) is connected upstream of said solenoid valve of said second valve means (324), which release valve in an opened position serves to relieve the pressure on said actuator (344) via an outlet (362), which release valve is connected in parallel with a restriction (360) suitable for the passage of said second volume flow and is configured in such a way that said release valve operable by pressure (358) is opened when said solenoid valve of said second valve means (324) is connected in the open position for relief of the pressure on said actuator (344) and when a pressure upstream of said restriction (360) exceeds a predetermined value.

9. Device (300) according to Claim 8, **characterised in that** said release valve operable by pressure (358) is configured in such a way that it closes when said solenoid valve of said second valve means (324) is in a blocking position.

10. Device (500; 600) according to Claim 7, **characterised in that** said solenoid valve of said second valve means (524; 624) is coupled to said actuator (544; 644) exclusively via a release valve operable by pressure (558; 658).

11. Device (500; 600) according to Claim 10, **characterised in that** said release valve operable by pressure (558; 658) is so configured that it comprises a permanent connection between said solenoid valve of said second valve means (524; 624) and said actuator (544; 644), which is suitable for the passage of said second volume flow therethrough, and that it opens for relief of the pressure via an outlet (562; 662) when the pressure upstream of said release valve operable by pressure (558; 658) exceeds a predetermined value.

12. Device (600) according to Claim 11, **characterised in that** said permanent connection is formed by a bore (664) in a valve piston (638) of said outlet valve (658).

13. Device (500) according to Claim 11, **characterised in that** said permanent connection is formed by a bore (564) in a diaphragm (566) of said outlet valve (558).

14. Device (700) according to Claim 2, **characterised in that** downstream of said solenoid valve of said second valve means (724) a restriction (760) is provided which is adapted for the passage of said second volume flow therethrough, with an outlet valve operable by pressure (758) being connected upstream of said restriction (760), wherein said release valve operable by pressure (758) is configured in such a way that it opens for pressure relief via an outlet (762) when a pressure prevailing between said restriction (760) and said solenoid valve of said second valve means (724) exceeds a predetermined value.

15. Device (400) according to Claim 8, **characterised in that** a restriction (460; 462) adapted for control in an actuator manner is provided upstream of said solenoid valve of said second valve means (424), via which restriction a volume flow towards said solenoid valve of said second valve means /(424) is adjustable up to said first volume flow at maximum.

16. Device according to Claim 5, **characterised in that** said solenoid valve of said second valve means is a 3/3-way valve presenting a blocking position in its middle position.

17. Device according to any of the Claims 1 to 16, **characterised in that** said actuator is so configured that when pressure is applied thereon it interrupts the transmission of power or torque via a power train of the vehicle through a clutch and that when the pressure is relieved the transmission of power or torque in said power train is established via said clutch.

18. Method of adjusting an actuator (344; 444; 544; 644; 744), in particular a clutch actuator of a vehicle, wherein pressure is applied on said actuator via a first valve means (14, 16; 314, 316; 414, 416; 514, 516; 614, 616; 714, 714) and the pressure on said actuator is relieved via a second valve means (24; 124; 324; 414; 524; 624; 724), wherein a first solenoid valve (14; 314; 414; 514; 614; 714) of said first valve means presents a first flow area for the passage of a first volume flow and a second solenoid valve (16; 316; 416; 516; 616; 716) of said first valve means presents a second flow area for the passage of a second volume flow, with said second flow area being smaller than said first flow area so that said second volume flow is smaller than said first volume flow, wherein said first solenoid valve and said second solenoid valve are connected in parallel and are suitable for a flow passage therethrough for pressure application on said actuator, **characterised in that** said second valve means comprises merely one solenoid valve via which the pressure on said actuator is relieved so that there is no redundancy for relief of the pressure on said actuator.

19. Method according to Claim 18, **characterised in that** said solenoid valve of said second valve means (24; 124; 424) presents a flow area corresponding to said first flow area and that a volume flow passes therethrough, which corresponds to said first volume flow, so as to induce relief of pressure on said actuator (444).

20. Method according to Claim 18 or 19, **characterised in that** said second solenoid valve (16) of said first valve means, through which said second volume flow may pass, and said solenoid valve of said second valve means (24), through which said first volume flow may pass, are switched into an open position in order to relieve the pressure on said actuator substantially by a volume flow corresponding to said second volume flow.

21. Method according to Claim 18, **characterised in that** said solenoid valve of said second valve means is a proportional valve by means of which a volume flow for relief of pressure on said actuator is adjusted proportionally to a control signal of said proportional valve.

22. Method according to Claim 18, **characterised in that** said solenoid valve of said second valve means (124) is adapted to take at least two open positions via which said first and second volume flow for relief of pressure on said actuator are each adjusted.

23. Method according to Claim 22, **characterised in that** a magnetic force corresponding to the selected open position is applied, which is different from a magnetic force of said other open position, in order to carry said solenoid valve of said second valve means (124) into one of two different open positions.

24. Method according to Claim 18, **characterised in that** said solenoid valve of said second valve means (324; 524; 624) presents a flow area corresponding to said second flow area and that a volume flow passes therethrough which corresponds to said second volume flow, in order to induce relief of pressure on said actuator (344; 544; 644).

25. Method according to Claim 24, **characterised in that** a release valve operable by pressure (358) is connected upstream of said solenoid valve of said second valve means (324), which, in an opened position, serves to relieve pressure on said actuator (344) via an outlet (362), and which is connected in parallel with a restriction (360) suitable for the passage of said second volume flow, such that said release valve operable by pressure (358) is opened when said solenoid valve of said second valve means (324) is connected in the open position for relief of the pressure on said actuator (344) and when a pressure upstream of said restriction (360) exceeds a predetermined value.

26. Method according to Claim 25, **characterised in that**, with a blocking position of said solenoid valve of said second valve means (324), said release valve operable by pressure (358) is closed.

27. Method according to Claim 24, **characterised in that** the relief of pressure on said actuator (544; 644) is performed exclusively via said solenoid valve (558; 658) of said second valve means (524; 524) and a release valve operable by pressure (558; 658) interposed between said solenoid valve of said second valve means (524; 624) and said actuator (544; 644).

28. Method according to Claim 27, **characterised in that** said release valve operable by pressure (558; 658) comprises a permanent connexion between said solenoid valve of said second valve means (524; 624) and said actuator (544; 644), through which said second volume flow may pass, and opens for pressure relief via an outlet (562; 662) when the pressure upstream of said release valve operable by pressure (558; 658) exceeds a predetermined value.

29. Method according to Claim 28, **characterised in that** with said solenoid valve of said second valve means (624) being in the open position, said second volume flow passes through said permanent connexion, which is formed by a bore (664) in a valve piston (638) of said release valve (656).

30. Method according to Claim 28, **characterised in that** with said solenoid valve of said second valve means (524) being in the open position, said second volume flow passes through said permanent connexion, which is formed by a bore (564) in a diaphragm (566) of said release valve (558).

31. Method according to Claim 19, **characterised in that** a restriction (760) through which said second volume flow may pass, and a release valve operable by pressure (758), which is connected upstream of said restriction (760), are provided downstream of said solenoid valve of said second valve means (724), wherein said release valve operable by pressure (758) opens for pressure relief via an outlet (762) when a pressure between said restriction (760) and said solenoid valve of said second valve means (724) exceeds a predetermined value.

32. Method according to Claim 19, **characterised in that** a volume flow towards said solenoid valve of said second valve means (424) is adjusted up to said first volume flow at maximum via a restriction (460; 462) adapted for control in an actuator manner, which is provided upstream of said solenoid valve of said second valve means (424).

33. Method according to Claim 22, **characterised in that** said solenoid valve of said second valve means is a 3/3-way valve that is switched into a blocking position representing a middle position of the 3/3-way valve, when relief of pressure on said actuator is to be inhibited.

34. Method according to any of the Claims 18 to 33, **characterised in that** when pressure is applied on said actuator, said actuator interrupts the transmission of power or torque in a power train of the vehicle through a clutch and, when the pressure is relieved, it establishes the transmission of power or torque in said power train via said clutch.

## Revendications

1. Dispositif (10; 300; 400; 500; 600; 700) de réglage d'un actionneur (344; 444; 544; 644; 744), en particulier un actionneur d'embrayage d'un véhicule, comprenant un premier moyen à soupape (14, 16; 314, 316; 414, 416; 514, 516; 614, 616; 714, 714), via lequel on peut exercer une pression sur ledit actionneur, et comprenant un deuxième moyen à soupape (24; 124; 324; 414; 524; 624; 724) via lequel on peut diminuer la pression sur ledit actionneur, dans lequel ledit premier moyen à soupape renferme une première électrovanne et une deuxième électrovanne, qui sont mises en parallèle, à ladite première électrovanne (14; 314; 414; 514; 614; 714) présentant une première section de passage de flux pour le passage d'un premier débit de volume et ladite deuxième électrovanne (16; 316; 416; 516; 716) présentant une deuxième section de passage de flux pour le passage of a deuxième débit de volume, à ladite deuxième section de passage de flux étant plus petite que ladite première section de passage de flux de façon, que ledit deuxième débit de volume soit plus petit que ledit premier débit de volume, dans lequel ladite première électrovanne et ladite deuxième électrovanne sont adaptées pour le passage d'un fluide à travers afin d'exercer une pression sur ledit actionneur, **caractérisé en ce que** ledit deuxième moyen à soupape ne comprend qu'une seule électrovanne, via laquelle on peut diminuer la pression sur ledit actionneur de façon, qu'il y n'ait pas une redondance pour la décompression dudit actionneur.

2. Dispositif (10; 400) selon la revendication 1, **caractérisé en ce que** ladite électrovanne dudit deuxième moyen à soupape (24; 124; 414) présente une section de passage de flux correspondant à ladite première section de passage de flux et est adaptée pour le passage d'un débit de volume à travers, qui correspond audit premier débit de volume afin de réaliser une décompression sur ledit actionneur (444).

3. Dispositif (10) selon la revendication 1 ou 2, **caractérisé en ce que** ladite deuxième électrovanne (16) dudit deuxième moyen à soupape, qui est adaptée pour le passage dudit deuxième débit de volume, et l'électrovanne dudit deuxième moyen à soupape (24), qui est adapté pour le passage dudit premier débit de volume, sont adaptées à être commuté en une position de passage pour la décompression dudit actionneur essentiellement par un débit de volume correspondant audit deuxième débit de volume.

4. Dispositif selon la revendication 1, **caractérisé en ce que** ladite électrovanne dudit deuxième moyen à soupape est une valve proportionnelle, via laquelle un débit de volume pour la décompression dudit actionneur est ajustable en proportion à un signal de commande de ladite valve proportionnelle.

5. Dispositif selon la revendication 1, **caractérisé en ce que** ladite électrovanne dudit deuxième moyen à soupape (124) est configurée d'une telle manière, qu'elle peut se placer en au moins deux positions de passage, via lesquelles on peut régler chacun dudit premier et dudit deuxième débit de volume pour la décompression dudit actionneur.

6. Dispositif selon la revendication 5, **caractérisé en ce que** des efforts magnétiques différents sont affectés auxdites deux positions de passage de ladite électrovanne dudit deuxième moyen à soupape (124) pour le mouvement de ladite électrovanne (124) en la position de passage respective.

7. Dispositif (300; 500; 600) selon la revendication 1, **caractérisé en ce que** ladite électrovanne dudit deuxième moyen à soupape (324; 524; 624) présente une section de passage de flux correspondante à ladite deuxième section de passage de flux, en étant apte pour le passage d'un débit de volume, qui correspond audit deuxième débit de volume afin de réaliser une décompression dudit actionneur (344; 544; 644).

8. Dispositif (300) selon la revendication 7, **caractérisé en ce qu'**une valve de sortie opérable par pression (358) est reliée en amont de ladite électrovanne dudit deuxième moyen à soupape (324), à cette valve de sortie, en position ouverte, servant à diminuer la pression sur ledit actionneur (344) via une sortie (362), à cette valve de sortie étant reliée en parallèle à un étranglement (360) adapté au passage dudit deuxième débit de volume et étant configuré d'une telle manière, que ladite valve de sortie opérable par pression (358) soit ouverte, quand ladite électrovanne dudit deuxième moyen à soupape (324) est relié dans la position de passage pour la décompression dudit actionneur (344) et quand une pression en amont dudit étranglement (360) dépasse un niveau prédéterminé.

9. Dispositif (300) selon la revendication 8, **caractérisé en ce que** ladite valve de sortie opérable par pression (358) est configurée d'une telle façon, qu'elle se ferme, quand ladite électrovanne dudit deuxième moyen à soupape (324) se trouve en une position de blocage.

10. Dispositif (500; 600) selon la revendication 7, **caractérisé en ce que** ladite électrovanne dudit deuxième moyen à soupape (524; 624) est accouplée audit actionneur (544; 644) exclusivement via une valve de sortie opérable par pression (558; 658).

11. Dispositif (500; 600) selon la revendication 10, **caractérisé en ce que** ladite valve de sortie opérable par pression (558; 658) est configurée d'une telle façon, qu'elle comprenne une connexion permanente ladite électrovanne dudit deuxième moyen à soupape (524; 624) et ledit actionneur (544; 644), qui est adaptée au passage dudit deuxième débit de volume à travers, et qu'elle s'ouvre pour la décompression via une sortie (562; 662), quand la pression en amont de ladite valve de sortie opérable par pression (558; 658) dépasse un niveau prédéterminé.

12. Dispositif (600) selon la revendication 11, **caractérisé en ce que** ladite connexion permanente est formée par un forage (664) dans un piston de soupape (638) de ladite soupape de sortie (658).

13. Dispositif (500) selon la revendication 11, **caractérisé en ce que** ladite connexion permanente est formée par un forage (564) dans une membrane (566) de ladite soupape de sortie (558).

14. Dispositif (700) selon la revendication 2, **caractérisé en ce qu'**en aval de ladite électrovanne dudit deuxième moyen à soupape (724), il y a un étranglement (760), qui est adapté au passage dudit deuxième débit de volume à travers, à une soupape de sortie opérable par pression (758) étant reliée en aval dudit étranglement (760), dans lequel ladite soupape de sortie opérable par pression (758) est configurée d'une telle façon, qu'elle s'ouvre pour la décompression via une sortie (762), quand une pression régnant entre ledit étranglement (760) et ladite électrovanne dudit deuxième moyen à soupape (724) dépasse un niveau prédéterminé.

15. Dispositif (400) selon la revendication 8, **caractérisé en ce qu'**un étranglement (460; 462) adapté pour la commande de façon d'un actionneur est disposé en amont de ladite électrovanne dudit deuxième moyen à soupape (424), via cet étranglement étant ajustable un débit de volume vers ladite électrovanne dudit deuxième moyen à soupape /(424) jusqu'au niveau dudit premier débit de volume au maximum.

16. Dispositif selon la revendication 5, **caractérisé en ce que** ladite électrovanne dudit deuxième moyen à soupape est une soupape à 3/3 voies, présentant une position de blocage en sa position médiane.

17. Dispositif une quelconque des revendications 1 à 16, **caractérisé en ce que** ledit actionneur est configuré d'une telle façon, que, quand une pression y est exercé, il interrompe la transmission de puissance ou du couple via un groupe motopropulseur du véhicule à travers un embrayage, et, quand la pression est diminuée, la transmission de puissance ou couple dans ledit groupe motopropulseur est établie via ledit embrayage.

18. Procédé de réglage un actionneur (344; 444; 544; 644; 744), en particulier un actionneur d'embrayage d'un véhicule, dans lequel de la pression est exercée sur ledit actionneur via un premier moyen à soupape (14, 16; 314, 316; 414, 416; 514, 516; 614, 616; 714, 714) et la pression sur ledit actionneur est diminuée via un deuxième moyen à soupape (24; 124; 324; 414; 524; 624; 724), dans lequel une première électrovanne (14; 314; 414; 514; 614; 714) dudit premier moyen à soupape présente une première section de passage de flux pour le passage d'un premier débit de volume et une deuxième électrovanne (16; 316; 416; 516; 616; 716) dudit premier moyen à soupape présente une deuxième section de passage de flux pour le passage d'un deuxième débit de volume, à ladite deuxième section de passage de flux étant plus petite que ladite première section de passage de flux de façon, que ledit deuxième débit de volume soit plus petit que ledit premier débit de volume, dans lequel ladite première électrovanne et ladite deuxième électrovanne sont reliées en parallèle et sont adaptées à un passage d'un fluide à travers pour l'application d'une pression sur ledit actionneur, **caractérisé en ce que** ledit deuxième moyen à soupape ne comprend qu'une seule électrovanne, via laquelle la pression sur ledit actionneur est diminuée de manière, qu'il n'y ait pas une redondance pour la décompression dudit actionneur.

19. Procédé selon la revendication 18, **caractérisé en ce que** ladite électrovanne dudit deuxième moyen à soupape (24; 124; 424) présente une section de passage de flux correspondant à ladite première section de passage de flux, et **en ce qu'**un débit de volume passe à travers, qui correspond audit premier débit de volume, afin d'induire la décompression dudit actionneur (444).

20. Procédé selon la revendication 18 or 19, **caractérisé en ce que** ladite deuxième électrovanne (16) dudit premier moyen à soupape, à travers laquelle peut passer ledit deuxième débit de volume, et ladite électrovanne dudit deuxième moyen à soupape (24), à travers laquelle peut passer ledit premier débit de volume, sont commutées en une position de passage afin de diminuer la pression sur ledit actionneur essentiellement par un débit de volume correspondant audit deuxième débit de volume.

21. Procédé selon la revendication 18, **caractérisé en ce que** ladite électrovanne dudit deuxième moyen à soupape est une valve proportionnelle, moyennant laquelle un débit de volume pour la décompression dudit actionneur est réglé en proportion à un signal de commande de ladite valve proportionnelle.

22. Procédé selon la revendication 18, **caractérisé en ce que** ladite électrovanne dudit deuxième moyen à soupape (124) est adaptée à se placer en au moins deux positions de passage, via lesquelles ledit premier et ledit deuxième débit de volume sont réglé chacun pour la décompression dudit actionneur.

23. Procédé selon la revendication 22, **caractérisé en ce qu'**un effort magnétique correspondant à la position de passage choisie est appliquée, qui est différent d'un effort magnétique de ladite autre position de passage, afin de porter ladite électrovanne dudit deuxième moyen à soupape (124) en une de deux positions de passage différentes.

24. Procédé selon la revendication 18, **caractérisé en ce que** ladite électrovanne dudit deuxième moyen à soupape (324; 524; 624) présente une section de passage de flux correspondant à ladite deuxième section de passage de flux, et en qu'un débit de volume passe à travers, qui correspond audit deuxième débit de volume, afin d'induire la décompression dudit actionneur (344; 544; 644).

25. Procédé selon la revendication 24, **caractérisé en ce qu'**une valve de sortie opérable par pression (358) est reliée en amont de ladite électrovanne dudit deuxième moyen à soupape (324), qui, en une position ouverte, sert à diminuer la pression sur ledit actionneur (344) via une sortie (362), et qui est reliée en parallèle à un étranglement (360) adapté pour le passage dudit deuxième débit de volume, de façon, que ladite valve de sortie opérable par pression (358) soit ouverte, quand adite électrovanne dudit deuxième moyen à soupape (324) est placée en la position de passage pour la décompression dudit actionneur (344), et quand une pression en amont dudit étranglement (360) dépasse un niveau prédéterminé.

26. Procédé selon la revendication 25, **caractérisé en ce qu'**en une position de blocage de ladite électrovanne dudit deuxième moyen à soupape (324), ladite valve de sortie opérable par pression (358) est fermée.

27. Procédé selon la revendication 24, **caractérisé en ce que** la décompression dudit actionneur (544; 644) se fait exclusivement via ladite électrovanne (558; 658) dudit deuxième moyen à soupape (524; 524) et une valve de sortie opérable par pression (558; 658) interposée entre ladite électrovanne dudit deuxième moyen à soupape (524; 624) et ledit actionneur (544; 644).

28. Procédé selon la revendication 27, **caractérisé en ce que** ladite valve de sortie opérable par pression (558; 658) comprend une connexion permanente entre ladite électrovanne dudit deuxième moyen à soupape (524; 624) et ledit actionneur (544; 644), à travers laquelle ledit deuxième débit de volume peut passer, et s'ouvre pour la décompression via une sortie (562; 662), quand la pression en amont de ladite valve de sortie opérable par pression (558; 658) dépasse un niveau prédéterminé.

29. Procédé selon la revendication 28, **caractérisé en ce qu'**à ladite électrovanne dudit deuxième moyen à soupape (624) étant en sa position de passage, ledit deuxième débit de volume passe à travers ladite connexion permanente, qui est formée par un forage (664) dans un piston de soupape (638) de ladite valve de sortie (656).

30. Procédé selon la revendication 28, **caractérisé en ce qu'**à ladite électrovanne dudit deuxième moyen à soupape (524) étant en sa position de passage, ledit deuxième débit de volume passe à travers ladite connexion permanente, qui est formée par un forage (564) dans une membrane (566) de ladite valve de sortie (558).

31. Procédé selon la revendication 19, **caractérisé en ce qu'**un étranglement (760), à travers lequel peut passer ledit deuxième débit de volume, et une valve de sortie opérable par pression (758), qui est reliée en amont dudit étranglement (760), sont pourvus en aval de ladite électrovanne dudit deuxième moyen à soupape (724), dans lequel ladite valve de sortie opérable par pression (758) s'ouvre pour la décompression via une sortie (762), quand une pression entre ledit étranglement (760) et ladite électrovanne dudit deuxième moyen à soupape (724) dépasse un niveau prédéterminé.

32. Procédé selon la revendication 19, **caractérisé en ce qu'**un débit de volume vers ladite électrovanne dudit deuxième moyen à soupape (424) est réglé jusqu'au niveau dudit premier débit de volume au maximum via un étranglement (460; 462) apte pour la commande de façon d'un actionneur, qui est disposé en amont de ladite électrovanne dudit deuxième moyen à soupape (424).

33. Procédé selon la revendication 22, **caractérisé en ce que** ladite électrovanne dudit deuxième moyen à soupape est une soupape à 3/3 voies, qui est commutée en une position de blocage, qui représente une position médiane de la soupape à 3/3 voies, quand il est requis d'empêcher la décompression dudit actionneur.

34. Procédé selon une quelconque des revendications 18 à 33, **caractérisé en ce que**, quand de la pression est exercée sur ledit actionneur, ledit actionneur interrompe la transmission de puissance ou du couple dans un groupe motopropulseur du véhicule à travers un embrayage, et, quand la pression est diminuée, il établit la transmission de la puissance ou du couple dans ledit groupe motopropulseur via ledit embrayage.
